# FASCICULE DE BREVET EUROPEEN

(11) **EP 0 917 629 B1**
(45) Date de publication et mention de la délivrance du brevet: **07.08.2002**
(21) Numéro de dépôt: 98932225.0
(22) Date de dépôt: 17.06.1998
(51) Int. Cl.: F16D 13/75

(54) **EMBRAYAGE A FRICTION A DISPOSITIF DE RATTRAPAGE D'USURE DES GARNITURES DE FRICTION, EN PARTICULIER POUR VEHICULE AUTOMOBILE**
REIBUNGSKUPPLUNG MIT EINER VERSCHLEISS-NACHSTELLEINRICHTUNG INSBESONDERE FÜR KRAFTFAHRZEUGE
FRICTION CLUTCH WITH FRICTION LINING WEAR TAKE-UP DEVICE, IN PARTICULAR FOR MOTOR VEHICLE

(30) Priorité: 17.06.1997 FR 9707482; 24.12.1997 FR 9716487
(43) Date de publication de la demande: 26.05.1999
(73) Titulaire: VALEO, 75017 Paris (FR)
(72) Inventeur: DOREMUS, Olivier, F-62690 Izel Lez Hameau (FR); DESPRES, Dominique, F-80000 Amiens (FR); TRAVERS, Jean-Luc, F-80700 Andechy (FR)
(74) Mandataire: CABINET BONNET-THIRION
(86) Numéro de dépôt international: FR9801273
(87) Numéro de publication internationale: WO9858186

(56) Documents cités:
- DE-A- 19 617 092
- FR-A- 2 606 477
- FR-A- 2 739 158
- GB-A- 2 294 301
- GB-A- 2 294 983
- US-A- 5 181 593

## Description

La présente invention concerne un embrayage à friction, en particulier pour véhicule automobile, et se rapporte plus particulièrement à un embrayage équipé d'un dispositif de compensation de l'usure notamment des garnitures de friction, dit ci-après dispositif de rattrapage d'usure.

Un embrayage à friction classique comporte généralement un plateau de réaction, éventuellement en deux parties pour formation d'un volant amortisseur ou d'un volant flexible, calé en rotation sur un premier arbre, usuellement un arbre menant tel que le vilebrequin du moteur à combustion interne, et supportant par sa périphérie externe un couvercle auquel est attaché au moins un plateau de pression.

Le plateau de pression est solidaire en rotation du couvercle et du plateau de réaction tout en pouvant se déplacer axialement sous la sollicitation de moyens embrayeurs élastiques à action axiale commandés par des moyens débrayeurs ; les moyens embrayeurs peuvent consister en des ressorts hélicoïdaux, ou en une ou deux rondelles Belleville montées en série ou en parallèle, soumis à l'action de leviers de débrayage formant les moyens débrayeurs ; généralement, les moyens embrayeurs et débrayeurs appartiennent à une même pièce, par exemple un diaphragme métallique prenant appui sur le couvercle ; le diaphragme peut être monté en série ou en parallèle avec une rondelle Belleville pour assurer une assistance de l'effort de débrayage, comme décrit par exemple dans le document FR-A-2 753 758.

Un disque de friction, portant des garnitures de friction à sa périphérie externe, solidaire en rotation d'un arbre, usuellement un arbre mené tel que l'arbre d'entrée de la boîte de vitesses, est intercalé entre le plateau de pression et le plateau de réaction de façon à être serré entre eux lorsque l'embrayage est en position d'engagement. Les moyens embrayeurs commandent le déplacement axial du plateau de pression lorsqu'ils sont actionnés par une butée de débrayage par l'intermédiaire des moyens débrayeurs.

Au cours de la durée de vie d'un tel embrayage, les garnitures de friction ainsi que les contre-matériaux, plateau de pression et plateau de réaction, s'usent, ce qui provoque une variation de !a position du plateau de pression et celles des moyens embrayeurs à action axiale et de la butée de débrayage, d'où il s'ensuit, d'une part, une variation de la force de serrage du disque de friction entre les plateaux de pression et de réaction en raison des modifications des conditions de travail des moyens débrayeurs, et, d'autre part, que la force nécessaire pour débrayer s'en trouve affectée. En dotant un tel embrayage d'un dispositif de rattrapage d'usure, on évite ces inconvénients, les moyens embrayeurs, ainsi que la butée de débrayage, usuellement en appui constant sur les moyens débrayeurs, occupant la même position lorsque l'embrayage est en position d'engagement.

Un embrayage à friction équipé d'un dispositif de rattrapage d'usure est agencé en sorte que l'un des appuis des moyens embrayeurs, que ce soit l'appui lié directement ou indirectement au couvercle, ou l'appui lié directement ou indirectement au plateau de pression, est décalable axialement, un moyen, dit de compensation, étant prévu pour réaliser ce décalage, en association avec un moyen, dit d'actionnement, permettant la mise en oeuvre, en fait l'actionnement, dudit moyen de compensation et un moyen de déclenchement commandant lui-même le moyen d'actionnement en autorisant ou non l'entrée en fonction du moyen d'actionnement. Bien entendu, un dispositif de rattrapage d'usure est piloté par un moyen, dit de détection, sensible à l'usure des garnitures, directement ou indirectement, c'est-à-dire par exemple sensible à la position d'au moins l'un des constituants de l'embrayage influencée par ladite usure, ledit moyen de détection agissant sur l'un desdits moyens de compensation, d'actionnement et de déclenchement.

On connaît différents types de dispositif de rattrapaqe d'usure.

Par exemple, le document FR-A-2 753 503, qui est considéré comme l'état de la technique le plus proche, décrit un embrayage dans lequel le dispositif de rattrapage d'usure comprend des moyens à rampes disposées circonférentiellement, constituant le moyen de compensation, placés axialement entre l'appui décalable et le plateau de pression et adaptés à être entraînés en rotation grâce à une denture qu'ils portent à leur périphérie et avec laquelle coopère une vis sans fin disposée tangentiellement, des moyens d'entraînement en rotation de la vis sans fin étant prévus, rendus opérationnels par l'usure des garnitures de friction, ainsi que des moyens anti-retour empêchant la vis sans fin de tourner dans le sens contraire de celui dans lequel elle est entraînée en rotation par les moyens d'entraînement en rotation lorsqu'ils sont opérationnels, la vis sans fin, les moyens anti-retour et les moyens d'entraînement en rotation de la vis sans fin étant portés par un support solidaire du couvercle, et les moyens élastiques embrayeurs à action axiale étant constitués par un diaphragme. Les moyens d'entraînement en rotation, de la vis sans fin, sont commandés par le diaphragme ; les moyens à rampes sont constitués d'un anneau présentant l'appui décalable du diaphragme et des rampes inclinées et réparties circonférentiellement et le plateau de pression présente des plots ou des rampes destinés à coopérer avec les rampes des moyens à rampes ; la vis sans fin est montée à coulissement selon son axe en étant soumise à l'action d'un moyen élastique dit de rattrapage, constituant le moyen d'actionnement, et, lorsqu'elle est déplacée selon son axe, elle entraîne en rotation circonférentielle lesdits moyens à rampes. Les moyens d'entraînement en rotation de la vis sans fin sont constitués par une roue à rochet solidaire de la vis sans fin et les moyens anti-retour sont constitués par un cliquet qui coopère avec la roue à rochet. Ici, le moyen de détection est une languette actionnée par le diaphragme et adaptée à coopérer avec la roue à rochet, sa course augmentant avec l'usure jusqu'à pouvoir, lorsque l'embrayage est engagé, pousser une dent de la roue à rochet et faire tourner la vis en comprimant le moyen élastique de rattrapage ; le moyen de déclenchement est représenté par une diminution de la charge sur le cordon d'appui, lors du débrayage, le moyen élastique de rattrapage, lorsque sa charge est suffisante pour vaincre les efforts de frottement, autorisant le déplacement des rampes inclinées et donc le décalage axial de l'appui plateau.

Ainsi, le moyen de détection, ici la languette commandée par le diaphragme, agit, via la roue à rochet, sur le moyen d'actionnement, ici le moyen élastique de rattrapage, en faisant apparaître un effort d'actionnement ; le déclenchement a lieu lors d'une opération de débrayage ultérieure.

Dans le document GB-A-2 294 983, les moyens embrayeurs sont constitués par un diaphragme et l'appui décalable est également l'appui plateau ; le moyen de compensation est là aussi constitué par des rampes ; le moyen d'actionnement est un ressort qui agit en permanence entre rampes et contre-rampes dans le sens de l'augmentation de l'épaisseur axiale ; là encore le déclenchement est réalisé lors de l'opération de débrayage par une diminution de la charge sur le cordon d'appui tandis que le plateau de pression se déplace, en fonction de l'usure, par rapport à une goupille en appui sur le plateau de réaction, ladite goupille, traversant à frottement le plateau de pression, constituant le moyen de détection. Cette goupille porte une butée sous forme d'un levier coopérant avec les moyens à rampes ; le moyen de détection agit donc sur le moyen de compensation.

Dans le document GB-A-2 294 301, les moyens embrayeurs sont également constitués par un diaphragme, le moyen de compensation par des rampes et le moyen d'actionnement par un ressort agissant en permanence entre les rampes et ici le couvercle ; ici, l'appui décalable est l'appui primaire porté par le couvercle ; l'embrayage est du type poussé et le déclenchement est obtenu par affaissement de l'appui secondaire, situé en vis-à-vis de l'appui primaire côté plateau de pression, monté élastiquement, la charge maximale de débrayage augmentant avec l'usure, ceci constituant le moyen de détection qui, en s'affaissant, constitue le moyen de déclenchement. Le moyen de détection agit donc sur le moyen de déclenchement, un jeu apparaissant entre les appuis primaire et secondaire lors de l'affaissement de l'appui secondaire, ledit jeu étant comblé par un mouvement de l'appui primaire sous l'action du moyen d'actionnement.

Dans le document US-A-5 564 541, selon la variante de la figure 10, le moyen de détection est une goupille disposée avec jeu entre le couvercle et le plateau de réaction et traversant avec frottement le plateau de pression, l'effort nécessaire pour déplacer la goupille par rapport au plateau de pression étant supérieur à l'effort de rappel du plateau de pression, ici dû aux languettes tangentielles ; le moyen d'actionnement est un ressort qui agit en permanence entre le plateau de pression et les rampes qui constituent le moyen de compensation ; c'est l'appui plateau qui est déplaçable, le dispositif d'embrayage étant du type tiré. Ici, la course de débrayage varie : la position de débrayage complet est fixe en sorte que le déclenchement se produit en fin de cette opération de débrayage, après détection d'une usure et apparition d'un jeu, lequel est ensuite comblé sous l'action du moyen d'actionnement.

Dans le document FR-A-2 599 446, selon la variante de la figure 5, les éléments sont analogues à ceux du document précédent sauf que le moyen de compensation est une roue-libre unidirectionnelle axiale et le moyen d'actionnement un ressort sollicitant en permanence les billes en appui contre leurs rampes.

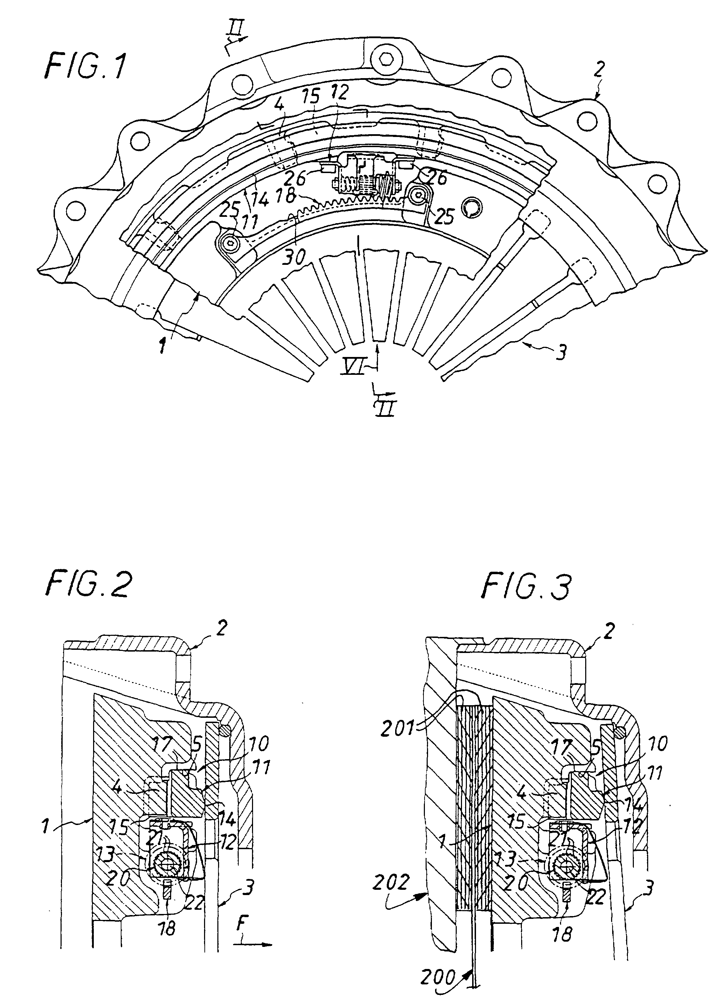

En variante de la figure 3 du document US-A- 5 564 541, le moyen de détection est une goupille disposée avec jeu entre le couvercle et le plateau de pression et traversant le couvercle avec frottement, l'effort nécessaire pour déplacer la goupille par rapport au couvercle étant supérieur à l'effort de rappel du plateau de pression ici dû aux languettes tangentielles ; le moyen d'actionnement est un ressort qui agit entre le couvercle et un anneau rotatif doté de rampes destinées à coopérer avec des contre-rampes ; c'est donc l'appui couvercle qui est déplaçable, l'embrayage étant du type tiré. Le déclenchement se produit en fin d'opération de débrayage après détection d'une usure et apparition d'un jeu comblé sous l'action du moyen d'actionnement ; comme à la figure 10, la position de débrayage complet est fixe, les moyens embrayeurs comportant des leviers de débrayage associés à des ressorts hélicoïdaux prenant appui sur le couvercle.

Lorsqu'un embrayage est équipé d'un dispositif de rattrapage d'usure, dont le fonctionnement est automatique, il est intéressant pour l'usager d'avoir une idée du degré d'usure des garnitures de friction ; en effet sans cette information, il risque d'utiliser son disque de friction jusqu'à usure quasi complète des garnitures, situation pouvant conduire à des dégradations importantes des surfaces de friction du volant et/ou du plateau de pression dont le changement est une opération coûteuse ; c'est le cas par exemple lorsque, les garnitures de friction du disque de friction étant maintenues par des rivets, ceux-ci viennent frotter contre le plateau de pression et détériorer la face de friction de ce plateau.

L'invention a pour but de pallier ces inconvénients.

Selon l'invention, un embrayage à friction, en particulier pour véhicule automobile, du genre comportant un plateau de réaction destiné à être calé en rotation sur un arbre menant, un disque de friction, portant à sa périphérie externe des garnitures de friction, destiné à être calé en rotation sur un arbre mené, un plateau de pression, un couvercle fixé sur le plateau de réaction, des moyens embrayeurs à action axiale qui sont commandés par des moyens débrayeurs et qui agissent entre, d'une part, le couvercle et, d'autre part, le plateau de pression par l'intermédiaire de moyens d'appui, le plateau de pression étant solidaire en rotation du couvercle tout en pouvant se déplacer axialement par rapport à lui et étant soumis à l'action de moyens élastiques de rappel rappelant le plateau de pression axialement vers le couvercle, ledit embrayage comportant également un dispositif de rattrapage d'usure, l'un des appuis des moyens embrayeurs étant décalable axialement et le dispositif de rattrapage d'usure comportant un moyen de compensation, mis en oeuvre par un moyen d'actionnement, prévu pour réaliser ce décalage, ledit moyen d'actionnement étant commandé par un moyen de déclenchement en association avec un moyen de détection, sensible à l'usure des garnitures, agissant sur l'un au moins des moyens d'actionnement, de compensation et de déclenchement, est caractérisé par le fait que le dispositif de rattrapage d'usure comprend également des moyens, dits moyens de mise hors circuit, le mettant hors circuit avant usure totale des garnitures, adaptés à agir sur l'un des éléments du groupe constitué par le moyen de compensation, le moyen d'actionnement, le moyen de déclenchement et le moyen de détection.

D'autres caractéristiques de l'invention sont définies dans les revendications dépendantes en fin de description.

Pour mieux faire comprendre l'objet de l'invention, on va décrire maintenant, à titre d'exemples, purement illustratifs et non limitatifs, des modes de réalisation représentés sur les dessins annexés dans lesquels :
- la figure 1 est une vue partielle de dessus, avec arrachements, d'un embrayage équipé d'un dispositif de rattrapage d'usure selon l'invention , garnitures neuves ;
- la figure 2 est une vue partielle en coupe de l'embrayage, selon II-II de la figure 1 ;
- la figure 3 est une vue analogue à la figure 2, l'embrayage étant débrayé ;
- les figures 4 et 5 sont des vues analogues aux figures 2 et 3, respectivement, après usure des garnitures ;
- la figure 6 est une vue partielle selon la flèche VI de la figure 1 ;
- la figure 7 est une vue partielle de la figure 1 montrant l'embrayage dans la condition où le dispositif de rattrapage d'usure n'est plus opérationnel, une certaine quantité d'usure ayant été rattrapée ;
- les figures 8 à 10 représentent le sous-ensemble unitaire constitué du support, de la vis sans fin, de la roue à rochet, du ressort, de l'axe et de l'organe élastique : la figure 8 est une vue selon la flèche VIII de la figure 10 qui est une vue en coupe selon X-X de la figure 8 ; la figure 9 est une vue selon la flèche IX de la figure 8 ;
- la figure 11 est une vue analogue à la figure 1 montrant un embrayage équipé d'une variante de dispositif de rattrapage d'usure selon l'invention ;
- la figure 12 est une vue agrandie de la loupe XII de la figure 11 ;
- la figure 13 est une vue en coupe selon XIII-XIII de la figure 11 ;
- la figure 14 est une vue en coupe selon XIV-XIV de la figure 11 ;
- la figure 15 est une vue partielle montrant une variante de moyens de mise hors circuit adaptés à agir sur le moyen de compensation constitués de rampes ;
- la figure 16 montre les moyens de mise hors circuit de la figure 15 en position opérationnelle ;
- la figure 17 est analogue à la figure 15 et montre une autre variante de moyens de mise hors circuit ;
- la figure 18 montre les moyens de mise hors circuit de la figure 17 en position opérationnelle ;
- la figure 19 montre encore une variante de moyens de mise hors circuit adaptés à agir sur le moyen d'actionnement constitué d'un ressort hélicoïdal ;
- la figure 20 est une vue partielle en perspective montrant encore une variante de moyens de mise hors circuit adaptés à agir sur le moyen de compensation constitués de rampes ;
- la figure 21 est une vue partielle en coupe d'une variante d'embrayage équipé d'un dispositif de rattrapage d'usure comprenant encore une autre variante de moyens de mise hors circuit adaptés à agir sur les moyens à rampes formant moyen de compensation ;
- la figure 22 est une vue partielle selon la flèche XXII de la figure 21 ;
- la figure 23 est une vue partielle analogue à la figure 21 montrant encore une autre variante de moyens de mise hors circuit ;
- la figure 24 est une vue partielle selon la flèche XXIV de la figure 23 ;
- les figures 25 et 26 sont des vues partielles en coupe d'une autre variante d'embrayage équipé d'un dispositif de rattrapage d'usure comprenant encore une autre variante de moyens de mise hors circuit adaptés à agir sur le moyen de déclenchement formant également moyen de détection, la figure 25 représentant l'embrayage engagé, garnitures neuves, et la figure 26 l'embrayage engagé, les moyens de mise hors circuit étant opérationnels ;
- la figure 27 est analogue à la figure 25 et montre encore une autre variante de moyens de mise hors circuit ;
- la figure 28 est une vue partielle en coupe d'une autre variante d'embrayage du type tiré équipé d'un dispositif de rattrapage d'usure comprenant encore une autre variante de moyens de mise hors circuit adaptés à agir sur le moyen de détection constitué d'une goupille, l'embrayage étant représenté à l'état débrayé, garnitures neuves ;
- la figure 29 est une vue agrandie de la loupe XXIX de la figure 28 ;
- les figures 30 et 31 sont analogues à la figure 29, les moyens de mise hors circuit étant représentés dans leur position opérationnelle, les garnitures étant usées et l'embrayage dans l'état embrayé, figure 30, et débrayé, figure 31 ;
- les figures 32 à 35 sont analogues à la figure 29 et montrent une variante de moyens de mise hors circuit adaptés à agir sur le moyen de détection, l'embrayage étant représenté, respectivement dans les conditions suivantes : embrayé garnitures neuves ; embrayé garnitures usées de la quantité désirée juste en fin d'opération de rattrapage ; embrayé et débrayé, garnitures usées au delà de la quantité ci-dessus, le dispositif de rattrapage d'usure étant hors circuit ;
- la figure 36 est une vue partielle en coupe d'une autre variante d'embrayage équipé d'un dispositif de rattrapage d'usure comprenant encore une autre variante de moyens de mise hors circuit adaptés à agir sur le moyen de détection également constitué d'une goupille.

Dans les figures 1 à 14, l'embrayage à diaphragme 3, 53 comporte un couvercle 2, 52, de forme creuse.

Ici, le couvercle est métallique en étant en tôle emboutie.

Ce couvercle comporte un fond et des moyens pour sa fixation à un plateau de réaction, éventuellement divisé pour formation d'un volant amortisseur, ou d'un volant flexible comme visible par exemple dans le document GB-A-2 294 301 auquel on se reportera pour plus de précisions.

Dans les modes de réalisation des figures 1 à 14, les moyens de fixation du couvercle consistent en une jupe annulaire d'orientation axiale prolongeant un rebord radial doté de trous pour passage des organes de fixation, tels que des vis, du couvercle 2 au plateau de réaction.

En variante, le couvercle 52 est globalement en forme d'assiette creuse et comporte à sa périphérie externe un rebord radial formant des moyens de fixation du couvercle au plateau de réaction, ledit rebord étant doté de trous pour passage d'organes de fixation, tels que des vis, du couvercle au plateau de réaction.

Dans les modes de réalisation des figures 1 à 10, l'embrayage est du type tiré en sorte qu'il faut agir en traction sur l'extrémité interne des doigts du diaphragme 3 pour désengager (débrayer) l'embrayage. La partie périphérique externe de la rondelle Belleville du diaphragme prend appui sur le fond du couvercle sur un jonc non référencé porté par la périphérie externe du fond du couvercle, en variante sur un embouti ménagé dans ledit fond. La partie périphérique interne de cette rondelle Belleville est en contact avec un appui 14 dit tertiaire décrit ci-après.

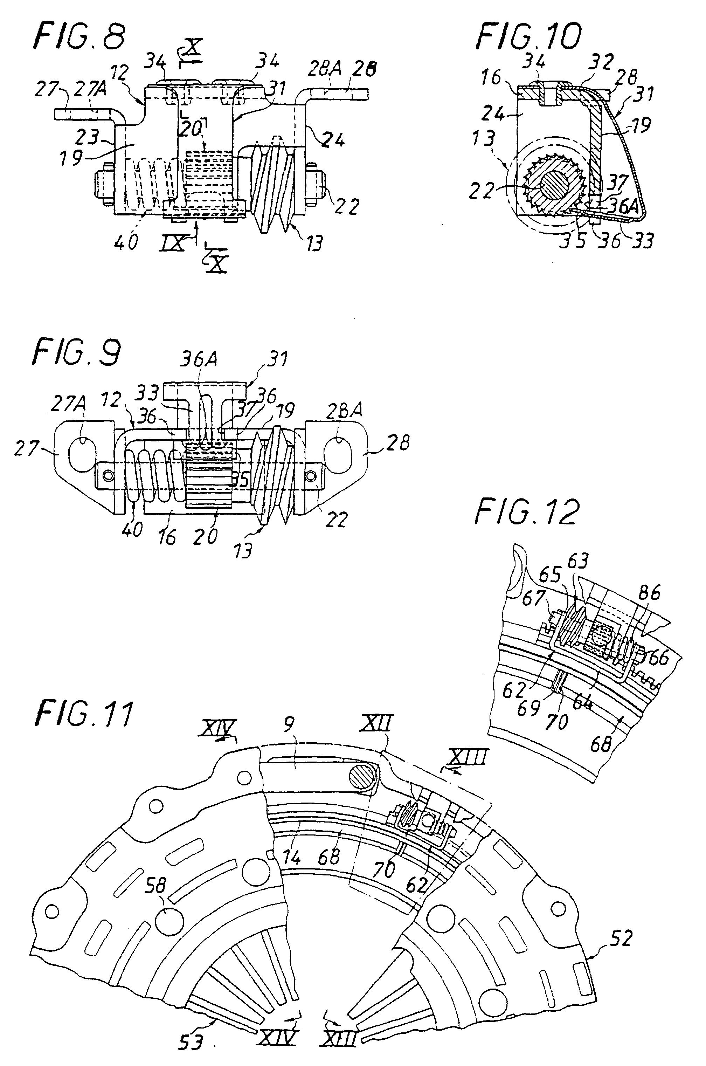

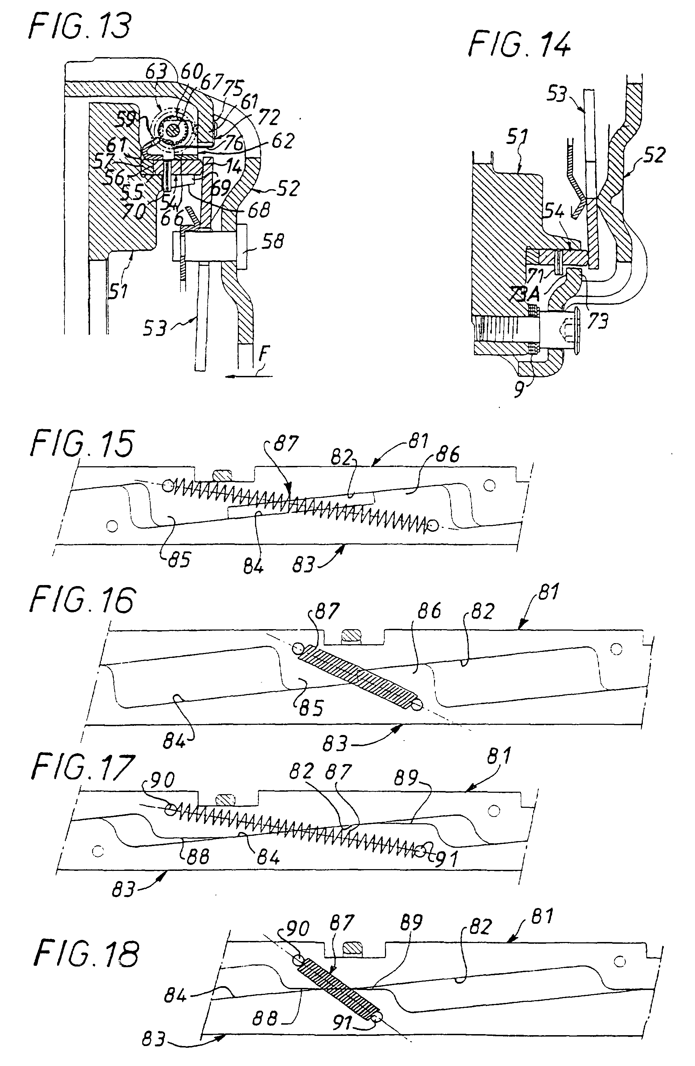

Dans le mode de réalisation des figures 11 à 14, l'embrayage est du type poussé, c'est-à-dire qu'il faut, à l'aide d'une butée de débrayage, non représentée, agir en poussant sur l'extrémité interne des doigts du diaphragme 53 pour désengager (débrayer) l'embrayage. Pour ce faire, le fond du couvercle 52 porte, d'une part, un appui primaire consistant par exemple en un embouti réalisé dans le fond du couvercle à la périphérie interne de celui-ci, et, d'autre part, en regard de l'appui primaire, un appui secondaire sous forme de têtes de colonnettes, de couronne roulée portée par des colonnettes 58 (figures 11 et 13), ou tout autre moyen. Le diaphragme 53, par la périphérie interne de sa rondelle Belleville, est monté de manière basculante entre lesdits appuis primaire et secondaire. Par la périphérie externe de sa rondelle Belleville, il est en contact avec des zones d'appui 54, décrites ci-après et constituant l'appui tertiaire.

En se reportant aux figures 1 à 10, on voit un mécanisme d'embrayage à friction, notamment pour véhicule automobile, qui comprend un plateau de pression 1 destiné à coopérer avec un disque de friction 200, portant à sa périphérie externe des garnitures de friction 201, qui coopère lui-même avec un plateau de réaction 202 ; pour des raisons de simplification, le disque de friction 200, les garnitures de friction 201 et le plateau de réaction 202 n'ont été esquissés que sur la figure 2. Le plateau de réaction 202 est destiné à être calé en rotation sur un arbre menant, tel que le vilebrequin du moteur à combustion interne. Le disque de friction 200 est solidaire en rotation d'un arbre mené tel que l'arbre d'entrée de la boîte de vitesses. Plus précisément, les garnitures 201 sont solidaires d'un support accouplé de manière rigide ou élastique à un moyeu calé en rotation sur l'arbre d'entrée et formant l'élément de sortie du disque de friction 200 ; au niveau des garnitures de friction 201, le support est axialement élastique, comme décrit par exemple dans le document GB-A-2 294 301 pour réaliser un disque de friction progressif.

Le plateau de pression 1 est solidaire en rotation d'un couvercle 2 de forme creuse par l'intermédiaire de languettes tangentielles non visibles sur les figures qui, élastiques, constituent en même temps des moyens de rappel du plateau de pression 1 vers le couvercle 2, ici métallique en tôle emboutie.

Le plateau de pression 1, tout en étant solidaire en rotation du couvercle 2, est donc déplaçable axialement par rapport au couvercle 2 sous la sollicitation de moyens élastiques à action axiale commandés, ici un diaphragme 3 prenant appui sur le couvercle 2 par sa périphérie externe, l'embrayage étant ici du type tiré, l'opération de débrayage étant effectuée en agissant sur l'extrémité des doigts du diaphragme 3 dans le sens de la flèche F de la figure 2.

Pour maintenir, lorsque l'embrayage est embrayé, les moyens élastiques à action axiale 3 dans une position indépendante de l'usure des garnitures du disque de friction, et dans une moindre mesure l'usure des plateaux de pression 1 et de réaction dont les faces, dites de friction, s'usent au contact des garnitures du disque, il est prévu un dispositif de rattrapage d'usure 10.

Le dispositif de rattrapage d'usure 10 comprend des moyens à rampes 11 disposées circonférentiellement ; plus précisément, ces moyens à rampes 11 sont constitués d'un anneau présentant des rampes 15 disposées circonférentiellement ; ledit anneau présente également des zones d'appui 14 constituées par une arête supérieure arrondie ou, en variante, chanfreinée, centrée sur l'axe de l'embrayage placée axialement à l'extérieur par rapport aux rampes 15.

Le plateau de pression 1 présente, ici venus de moulage et d'usinage, sur sa face tournée vers le fond du couvercle 2, des plots 4 répartis circonférentiellement à une distance l'un de l'autre qui correspond à celle qui sépare circonférentiellement deux rampes 15 successives, les plots 4 étant destinés à coopérer chacun avec une rampe 15.

Les moyens à rampes 11 sont placés axialement entre le diaphragme 3 et le plateau de pression 1 en sorte que les plots 4 reçoivent les rampes 15 et le diaphragme 3 coopère avec les zones d'appui 14 qui constituent ainsi les moyens d'appui par l'intermédiaire desquels le diaphragme 3 agit sur le plateau de pression 1.

Les moyens à rampes 11 présentent, à leur périphérie externe, une paroi cylindrique 17 parallèle à l'axe de l'embrayage coopérant avec une creusure cylindrique 5 de même axe que présente le plateau de pression sur sa face en regard du fond du couvercle 2 en sorte que les moyens à rampes 11 sont centrés par rapport au plateau de pression 1. Les moyens à rampes 11 constituent un moyen de compensation de manière décrite ci-après.

Le dispositif de rattrapage d'usure 10 comprend par ailleurs une roue à rochet 20 à dents inclinées 21 portée par un axe 22 qui porte également une vis sans fin 13.

L'axe 22 de la roue à rochet 20 est porté par un support 12, mieux visible sur les figures 8 à 10, en tôle découpée et pliée, en forme de U ayant une âme 19 et deux ailes 23, 24 destinées à supporter l'axe 22 ; à cet effet, chacune des ailes porte un trou circulaire adapté au diamètre de l'axe 22.

Les ailes 23, 24 du support 12 se prolongent selon des bras 27, 28 en forme de L s'étendant en éloignement l'un de l'autre perpendiculairement à l'âme 19.

Le support 12 est adapté à recevoir un organe élastique 31, ici métallique, en forme générale de C dont une extrémité 32 est utilisée pour la fixation, ici par des rivets 34, de l'organe élastique 31 sur un retour 16 de l'âme 19 du support 12, ce retour 16 s'étendant ici perpendiculairement à l'âme 19 et dans l'alignement du bras 28. L'autre extrémité 33, en forme de T, de l'organe élastique 31 porte en bout une languette de commande 35.

Lorsque l'organe élastique 31 et la roue à rochet 20 sont montés sur le support 12, la languette de commande 35 coopère avec un pied de dent de la roue à rochet 20 ; un ressort hélicoïdal 40 de compression est placé entre la roue à rochet 20 et l'aile 23 du support 12, en étant enroulé autour de l'axe 22 ; la vis sans fin 13 et la roue à rochet 20 sont taillées dans une même pièce ; comme on le voit, le support 12 équipé de cette même pièce, de l'organe élastique 31, du ressort 40 et de l'axe 22 constitue un sous-ensemble prêt à être installé.

Le ressort hélicoïdal 40 constitue le moyen élastique de rattrapage, formant moyen d'actionnement, comme décrit ci-dessous.

Le filet et le pas de la vis sans fin 13 sont adaptés à une denture 18 ; la vis sans fin 13 est amenée à coopérer avec la denture 18 dans les conditions qui seront décrites ci-après.

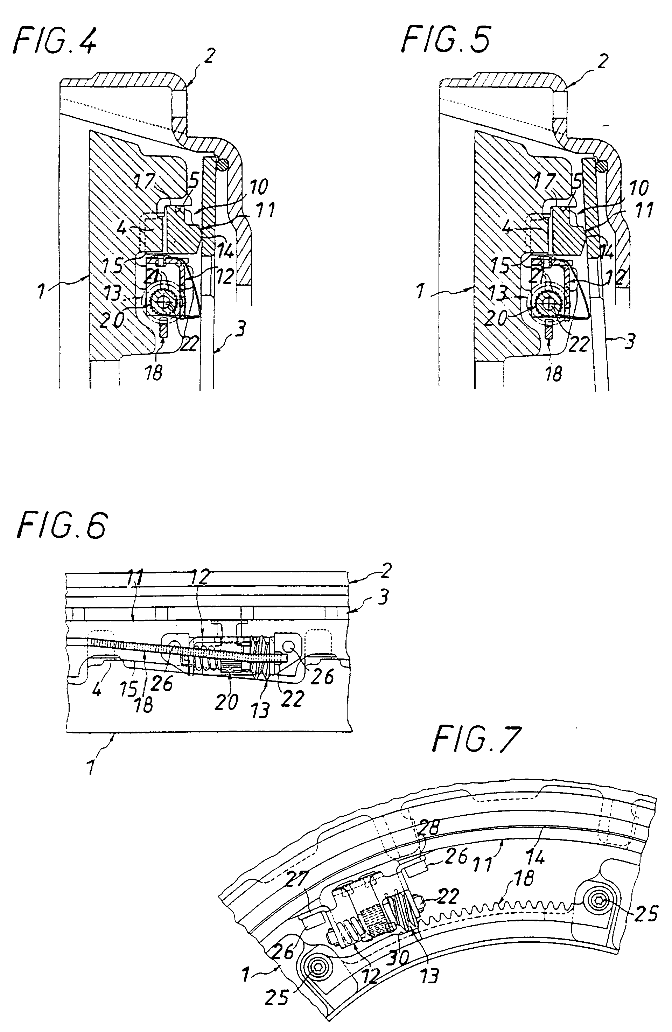

La denture 18, mieux visible sur les figures 6 et 7, est portée par une pièce en tôle pliée en forme générale de Z aplati et fixée par ses extrémités, à l'aide de vis 25, figure 1, sur des bossages du plateau de pression 1 ; ces extrémités sont transversalement disposées, par rapport à l'axe de l'embrayage, tandis que la partie inclinée qui les relie est parallèle aux rampes 15.

Le support 12, portant la roue à rochet 20, la vis sans fin 13 et le ressort hélicoïdal 40, étant solidaire des moyens à rampes 11, par exemple par des vis 26, le diaphragme 3 se déplace par rapport à lui lors des opérations de débrayage et de ré-embrayage ; on comprendra que, grâce à cette disposition, lors. du basculement du diaphragme 3 lors des opérations de ré-embrayage, celui-ci déplace la languette de commande 35 qui, par coopération avec les dents 21 de la roue à rochet 20, est amenée à faire tourner la roue à rochet 20 dans le sens horaire ; au retour, l'élasticité de l'organe élastique 31 et l'inclinaison des dents 21 font que la languette de commande 35 se déplace vers la droite par rapport aux figures 2 à 5 en montant sur les dents 21. En fonction de l'usure des garnitures 201, l'inclinaison du diaphragme 3 varie en sorte que la languette de commande 35, associée au diaphragme 3, constitue un moyen de détection sensible à l'état d'usure des garnitures de friction 201.

Le dispositif de rattrapage d'usure qui vient d'être décrit fonctionne comme suit.

La figure 2 représente l'embrayage engagé, les garnitures du disque de friction étant à l'état neuf et serrées entre le plateau de réaction, non représenté, et le plateau de pression 1. Dans cette position, la languette de commande 35 a son extrémité au pied d'une dent de la roue à rochet 20.

Lorsque l'embrayage est débrayé, le diaphragme 3 bascule et, dans son déplacement, libère progressivement la languette de commande 35 dont l'extrémité suit la rampe inclinée constituée par la dent dans le pied de laquelle elle se trouvait dans l'étape précédente ; l'extrémité de la languette de commande 35 est positionnée relativement aux dents 21 de la roue à rochet 20 en sorte que, lors de cette course de débrayage garnitures neuves, elle ne saute pas une dent, comme cela est visible sur la figure 3 ; ceci est obtenu par la venue en butée de l'extrémité 33 de l'organe élastique 31 contre le support 12, plus précisément contre les faces 36A, tournées vers la roue à rochet 20, des flancs 36 d'une échancrure 37 ménagée dans l'âme 19 du support 12 qui constituent une butée de contrôle et limitent la course de retour de la languette de commande 35 quelle que soit celle du diaphragme 3, comme le montre la figure 3, l'extrémité 33 ayant la forme d'un T dont l'âme se débat dans l'échancrure 37 et dont la barre constitue la languette de commande 35.

Lorsque les garnitures s'usent, comme on le sait le plateau de pression 1, toujours soumis à l'effort axial du diaphragme 3, se rapproche du plateau de réaction qui est fixe axialement comme le couvercle 2 ; le diaphragme 3 se rapproche donc du plateau de réaction, c'est-à-dire donc de l'extrémité ouverte du couvercle 2, en entraînant dans son mouvement la languette de commande 35 ; la roue à rochet 20 tourne autour de son axe dans le sens horaire ; l'embrayage engagé, garnitures usées, est représenté sur la figure 4. Cet entraînement en rotation de la roue à rochet 20 conduit la vis sans fin 13 à tourner également sur son 2 axe ; les moyens de rampes 11 étant immobilisés par rapport au couvercle 2 sous l'effet de la charge du diaphragme 3, la vis sans fin 13 qui engrène avec la denture 18 se visse en quelque sorte sur cette denture 18 en comprimant légèrement le ressort hélicoïdal 40, le sens du filet de la vis sans fin 13 étant prévu en sorte qu'il en soit ainsi.

Lors de l'opération de débrayage qui suit la phase d'usure qui vient d'être décrite, le plateau de pression 1 libère les garnitures en s'éloignant d'elles sous l'action des languettes tangentielles 9 qui ramènent vers le fond du couvercle 2 le plateau de pression 1 ainsi que les moyens à rampes 11 en contact avec le diaphragme 3 par leurs zones d'appui 14 et avec les plots 4 du plateau de pression 1 par leurs rampes 15, l'extrémité de la languette sautant la dent.

Le ressort hélicoïdal 40 sollicite la vis sans fin 13 vers l'aile 24 du support 12, qu'elle a quittée en phases d'usure, c'est-à-dire de la droite vers la gauche par rapport aux figures 2 et 3 ; la charge du diaphragme 3 n'étant plus appliquée sur les moyens à rampes 11, le seul effort à vaincre pour pouvoir faire tourner ces moyens à rampes 11 par rapport au plateau de pression 1 est l'effort de frottement généré par l'effort de rappel des languettes tangentielles ; si la charge du ressort hélicoïdal 40 est suffisante pour vaincre cet effort, alors le ressort 40 prenant appui sur la vis sans fin 13, par l'intermédiaire ici de la roue à rochet 20, la vis sans fin 13 prenant appui sur la denture 18, fait tourner le support 12, donc les rampes 15 : en tournant sur elles-mêmes, les rampes 15 des moyens à rampes 11, par coopération avec les plots 4 du plateau de pression 1, éloigneront le plateau de pression 1 du fond du couvercle 2, augmentant ainsi la distance axiale entre la face de travail du plateau de pression 1 et les zones d'appui 14 des moyens à rampes 11, rattrapant ainsi au moins en partie le déplacement du plateau de pression 1 dû à l'usure des garnitures. La charge du ressort hélicoïdal 40 étant fonction de la quantité dont il aura été comprimé par la vis sans fin 13 durant les phases d'usure, on voit que plusieurs opérations d'embrayage et de débrayage peuvent être nécessaires avant que le dispositif de rattrapage d'usure 10 n'entre en phase de rattrapage proprement dite, ceci étant fonction du dimensionnement relatif des pièces concernées ; à titre d'exemple, celles-ci peuvent être réalisées de telle sorte que cette phase de rattrapage proprement dite n'intervienne la première fois qu'après une certaine usure ; sur la figure 5, qui correspond à l'embrayage débrayé garnitures usées, on a supposé qu'il n'y a pas eu de rattrapage ; on a supposé également que l'usure a été suffisante pour que la roue à rochet 20 ait suffisamment tourné de sorte qu'au retour la languette de commande 35 a sauté une dent.

Ainsi, c'est lors de l'opération d'embrayage que la languette de commande 35, poussée par le diaphragme 3, fait tourner la roue à rochet 20 qui comprime le ressort 40, et, lors du débrayage suivant, les moyens à rampes 11, non serrés par le diaphragme 3, tournent sous l'action du moyen d'actionnement, ici le ressort 40 si sa charge est suffisante, et compensent le déplacement du plateau dû à l'usure ; en fin de l'opération de rattrapage, le diaphragme 3, la roue à rochet 20 et la languette de commande 35 retrouvent la position qu'ils occupaient à la figure 2.

Selon l'invention, l'embrayage est équipé d'un dispositif de rattrapage d'usure comprenant des moyens le mettant hors circuit avant usure totale des garnitures.

Ici ces moyens consistent en ce que la longueur de la denture 18 avec laquelle coopère la vis sans fin 13 ne permet à celle-ci que d'opérer le rattrapage d'une usure correspondant à une partie seulement de l'épaisseur des garnitures à user, par exemple 80 pour cent de celle-ci ; avantageusement, en fin de denture, un embrèvement 30, visible sur les figures 1 et 7, permet à la vis sans fin 13 de se déconnecter, à ce stade, de la denture 18. Ainsi, la figure 1 montre les positions relatives de la vis sans fin 13 et de la denture 18 garnitures neuves, et la figure 7 ces positions alors que les garnitures ont été usées à 80 pour cent, par exemple.

La vis sans fin 13 n'agissant plus sur la denture 18, l'embrayage fonctionne comme un embrayage non équipé d'un dispositif de rattrapage d'usure : l'usure se poursuivant, la position du diaphragme évolue dans l'état embrayé de l'embrayage, avec l'usure, et donc sa charge et l'effort à fournir de débrayage qui, comme on le sait, croît avec l'usure ; dès lors, l'usager est averti et sait qu'il a franchi le cap des 80 pour cent d'usure.

Dans la variante qui vient d'être décrite, la vis sans fin 13 et la roue à rochet 21 sont d'une seule pièce ; bien entendu, la vis sans fin 13 pourrait être une pièce distincte et pourvue d'un alésage, ledit alésage et l'axe lui-même étant agencés de telle sorte que la vis sans fin peut coulisser le long de l'axe tout en étant solidaire en rotation dudit axe.

En se reportant aux figures 11 à 14, on voit un mécanisme d'embrayage à friction, notamment pour véhicule automobile, qui comprend un plateau de pression 51 destiné à coopérer avec un disque de friction non représenté, portant à sa périphérie externe des garnitures de friction, qui coopère lui-même avec un plateau de réaction. Le plateau de réaction, non représenté, est destiné à être calé en rotation sur un arbre menant, tel que le vilebrequin du moteur à combustion interne. Le disque de friction est solidaire en rotation d'un arbre mené tel que l'arbre d'entrée de la boîte de vitesses.

Le plateau de pression 51 est solidaire en rotation d'un couvercle 52 de forme creuse par l'intermédiaire de languettes tangentielles 9 qui, axialement élastiques, constituent en même temps des moyens de rappel du plateau de pression 51 vers le couvercle 52.

Le plateau de pression 51, tout en étant solidaire en rotation du couvercle 52, est donc déplaçable axialement par rapport au couvercle 52 sous la sollicitation de moyens élastiques à action axiale commandés, ici un diaphragme 53 articulé sur le couvercle 52 grâce à des colonnettes 58 portant une couronne roulée offrant un appui secondaire au diaphragme 53, l'embrayage étant ici du type poussé, l'opération de débrayage étant effectuée en agissant sur l'extrémité des doigts du diaphragme dans le sens de la flèche F de la figure 13.

Pour maintenir, lorsque l'embrayage est embrayé, les moyens élastiques à action axiale 53 dans une position indépendante de l'usure des garnitures du disque de friction, et dans une moindre mesure l'usure des plateaux de pression 51 et de réaction dont les faces, dites de friction, s'usent au contact des garnitures du disque, il est prévu un dispositif de rattrapage d'usure qui comprend des moyens à rampes 54 disposées circonférentiellement, constituant un moyen de compensation ; plus précisément, ces moyens à rampes 54, sont constitués d'un anneau présentant des rampes 56 disposées circonférentiellement sur sa face tournée vers le plateau de pression 51 ; sur sa face opposée, ledit anneau présente la zone d'appui 14 constituée par une arête supérieure arrondie ou chanfreinée disposée en arc de cercle centré sur l'axe de l'embrayage. Bien entendu, ladite zone d'appui 14 peut être continue ou discontinue.

Le plateau de pression 51 présente, sur sa face tournée vers le fond du couvercle 52, une face d'appui 61 transversale avec laquelle coopère des moyens de contre-rampes 57 en forme d'anneau portant sur sa face opposée à celle qui coopère avec la face d'appui 61 des contre-rampes 55 réparties circonférentiellement à une distance l'une de l'autre qui correspond à celle qui sépare circonférentiellement deux rampes 56 successives, les contre-rampes 55 étant destinées à coopérer chacune avec une rampe 56.

Les moyens à rampes 54 sont placés axialement entre le diaphragme 53 et les moyens de contre-rampes 57 en sorte que les contre-rampes 55 reçoivent les rampes 56 et le diaphragme 53 coopère avec la zone d'appui 14 qui constitue ainsi les moyens d'appui par l'intermédiaire desquels le diaphragme 53 agit sur le plateau de pression 51.

La périphérie externe des moyens de contre-rampes 57 est munie d'une denture 59.

Ici, la denture 59 est réalisée à partir d'une tôle découpée et pliée, et rapportée par soudage sur les moyens de contre-rampes 57.

Le pied de la face d'appui 61 du plateau de pression 51 est bordée par un redent 68 cylindrique circonférentiel sur la périphérie externe duquel sont centrés les moyens de contre-rampes 57 et les moyens à rampes 54.

Le redent 68 présente une échancrure axiale 69 dans laquelle est susceptible de se débattre axialement une goupille 70 s'étendant radialement et portée par les moyens à rampes 54 : ainsi, ceux-ci sont empêchés de tourner par rapport au plateau de pression 51, donc par rapport aux moyens de contre-rampes 57, tout en pouvant se déplacer axialement.

Le dispositif de rattrapage d'usure comprend par ailleurs une roue à rochet 60 à dents inclinées 21 montée tournante autour d'un axe 67 qui porte également une vis sans fin 63 ; le filet et le pas de la vis sans fin 63 sont adaptés à la denture 59 des moyens de contre-rampes 57 ; la vis sans fin 63 est amenée à coopérer avec la denture 59 dans les conditions qui seront décrites ci-après ; ici, la denture 59 s'étend radialement par rapport à l'axe 67.

L'axe 67 est porté à rotation par un support 62 en tôle découpée et pliée, en forme générale de U ayant une âme 64 et deux ailes 65, 66 adaptées à supporter l'axe 67 ; le support 62 est fixé par son âme 64, par exemple par soudage, aux moyens à rampes 54, à la périphérie externe de ceux-ci, radialement au dessus de la zone d'appui 14.

Un organe élastique 72, ici métallique et de plus faible épaisseur que le support, en forme générale de L droit comprend deux ailes 75, 76 dont une aile 75 pour la fixation, par exemple par rivetage, de l'organe élastique 72 sur une patte 61 transversale du couvercle 52, et dont l'autre aile 76 est conformée en languette de commande formant, en association avec le diaphragme 53, le moyen de détection, et s'étend ici globalement parallèlement à l'axe de l'embrayage ; lorsque l'organe élastique 72 et la roue à rochet 60 sont montés, le premier sur le couvercle 52 et la seconde sur les moyens à rampes 54, la languette de commande 76 coopère élastiquement avec un pied de dent de la roue à rochet 60.

Autour de l'axe 67 est placé un ressort hélicoïdal 86 constituant le moyen élastique de rattrapage, comme décrit ci-dessous ; ici, le ressort 86, jouant le rôle du moyen d'actionnement, est placé axialement entre la roue à rochet 60 et l'aile 66 du support 62.

Le support 62 portant la roue à rochet 60, la vis sans fin 63 et le ressort hélicoïdal 86 étant solidaire des moyens à rampes 54, il se déplace par rapport au couvercle 52, donc par rapport à la languette de commande 76, lors des opérations de débrayage et de ré-embrayage ; on comprendra que, grâce à cette disposition, lors du basculement du diaphragme 52 lors des opérations de ré-embrayage, la roue à rochet 60 se déplace de la droite vers la gauche, par rapport à la figure 11, et, par coopération avec les dents 21 de la roue à rochet 60, l'extrémité de la languette de commande 76 est amenée à faire tourner la roue à rochet 60 dans le sens anti-horaire ; lors du débrayage, l'élasticité de l'organe élastique 72 et l'inclinaison des dents 21 font que la languette de commande 76 monte sur les dents 21.

Le dispositif de rattrapage d'usure qui vient d'être décrit fonctionne comme suit.

Les figures 11 et 14 représentent l'embrayage engagé, les garnitures du disque de friction étant à l'état neuf et serrées entre le plateau de réaction, non représenté, et le plateau de pression 51. Dans cette position, la languette de commande 76 a son extrémité au pied d'une dent de la roue à rochet 60.

Lorsque l'embrayage est débrayé, l'extrémité des doigts du diaphragme 53 est sollicitée dans le sens de la flèche F en éloignement du fond du couvercle 52 ; le diaphragme 53 bascule autour des colonnettes 58 ; dans son déplacement, la périphérie externe du diaphragme 53 libère progressivement le plateau de pression 51 qui entraîne la roue à rochet 60 vers le fond du couvercle 52, laquelle se déplace devant la languette de commande 76 dont l'extrémité suit la rampe inclinée constituée par la dent dans le pied de laquelle elle se trouvait dans l'étape précédente ; l'extrémité de la languette de commande 76 est positionnée relativement aux dents 21 de la roue à rochet 60 en sorte que, lors de cette course de débrayage garnitures neuves, elle ne saute pas une dent ; ceci est obtenu par la venue en butée d'une butée de contrôle 71 contre une contre-butée 73 du couvercle 52 ; ici, la butée de contrôle 71 est réalisée par une goupille portée par les moyens à rampes 54 et adaptée à coopérer en butée avec une patte 73 du couvercle obtenue par découpe et pliage.

Lorsque les garnitures s'usent, comme on le sait le plateau de pression 51, toujours soumis à l'effort axial du diaphragme 53, se rapproche du plateau de réaction qui est fixe axialement comme le couvercle 52 ; la roue à rochet 60 se rapproche donc du plateau de réaction, en s'éloignant donc de la languette de commande 76 qui retient la dent 21 avec laquelle elle coopère en fond de dent ; la roue à rochet 60 tourne donc autour de son axe dans le sens anti-horaire ; cet entraînement en rotation de la roue à rochet 60 conduit la vis sans fin 63 à tourner également sur son axe ; les moyens de contre-rampes 57 étant immobilisés en rotation sous l'effet de la charge du diaphragme 53, la vis sans fin 63 qui engrène avec la denture 59 des moyens de contre-rampes 57 se visse en quelque sorte sur cette denture 59 en comprimant le ressort hélicoïdal 86, le sens du filet de la vis sans fin 63 étant prévu en sorte qu'il en soit ainsi.

Lors de l'opération de débrayage qui suit la phase d'usure qui vient d'être décrite, le plateau de pression 51 libère les garnitures en s'éloignant d'elles sous l'action des languettes tangentielles 9 qui ramènent vers le fond du couvercle 52 le plateau de pression 51 ainsi que les moyens à rampes 54 en contact avec le diaphragme 53 par leurs zones d'appui 14 et avec les contre-rampes 55 par leurs rampes 56. Le ressort hélicoïdal 86 sollicite la vis sans fin 63 vers l'aile 65 du support 62, dont elle s'est éloignée en phases d'usure, c'est-à-dire de la droite vers la gauche par rapport aux figures 9 et 10 ; la charge du diaphragme 53 n'étant plus appliquée sur les moyens à rampes 54, le seul effort à vaincre pour pouvoir faire tourner les moyens de contre-rampes 55 par rapport au plateau de pression 51 est l'effort de rappel des languettes tangentielies 9 ; si la charge du ressort hélicoïdal 86 est suffisante pour vaincre cet effort, alors le ressort 86 déplace la vis sans fin 63 qui est empêchée de tourner sur elle-même par la pression de la languette de commande 76 et qui entraînera la denture 59 : en tournant sur elles-mêmes, les contre-rampes 55, par coopération avec les rampes 56 fixes relativement, éloigneront le plateau de pression 51 du fond du couvercle 52, augmentant ainsi la distance axiale entre la face de travail du plateau de pression 51 et les zones d'appui 4 des moyens à rampes 54, rattrapant ainsi au moins en partie le déplacement du plateau de pression dû à l'usure des garnitures. Si l'usure a été suffisante pour que la roue à rochet 60 ait tourné suffisamment pour qu'au retour la languette de commande 76 saute une dent, lors de l'opération d'embrayage, la languette de commande 76 fait tourner la roue à rochet 60 et les moyens de contre-rampes 57, non encore serrés par le diaphragme 53, tournent et rattrapent l'usure ; en fin d'opération de rattrapage, le diaphragme 53, la roue à rochet 60, et la languette de commande 76 retrouvent leur position qu'ils occupaient à la figure 11. La charge du ressort hélicoïdal 86 étant fonction de la quantité dont il aura été comprimé par la vis sans fin 63 durant les phases d'usure, on voit que plusieurs opérations d'embrayage et de débrayage peuvent être nécessaires avant que le dispositif de rattrapage de jeu n'entre en phase de rattrapage proprement dite, ceci étant fonction du dimensionnement relatif des pièces concernées.

La vis sans fin 63 et la roue à rochet 60 étant taillées dans une même pièce, comme on le voit, le support 62 équipé de cette même pièce, du ressort 86, de l'axe 67, et les moyens à rampes 54 constituent un sous-ensemble prêt à être installé.

Dans les deux exemples qui viennent d'être décrits, l'avertissement donné à l'usager provient d'un changement de l'effort à fournir pour débrayer et/ou de la position de la butée de débrayage; cet avertissement est également sensible lorsque l'embrayage comporte une rondelle Belleville d'assistance au débrayage, comme décrit par exemple dans le document FR-A-2 753 758.

D'autres moyens d'avertissement peuvent être prévus pour avertir de la mise hors circuit du dispositif de rattrapage d'usure.

Ils peuvent par exemple consister en une détection du changement de position des moyens embrayeurs tels que le diaphragme.

Ils peuvent, en variante, consister en une détection du changement de position des moyens débrayeurs tels que les doigts du diaphragme, ou du changement de la position de la butée de débrayage.

On aura compris que l'invention s'applique quel que soit le type d'embrayage, tiré ou poussé, ou le type de dispositif de rattrapage d'usure qui pourrait, par exemple, être du genre de celui décrit dans le document FR-A-2 753 503, dans lequel la vis sans fin et les moyens d'entraînement de la vis sans fin sont portés par un support solidaire du couvercle de l'embrayage , ou un dispositif de rattrapage d'usure sans crémaillère et vis sans fin tel que décrit dans le document FR-A-2 712 051 ou FR-A-2 726 872.

Lorsque le moyen de compensation du dispositif de rattrapage d'usure est constitué de moyens à rampes adaptés à coopérer avec des moyens de contre-rampes, diverses variantes de moyens de mise hors circuit peuvent être adoptés.

Sur les figures 15 et 16, les moyens à rampes 81 comportent des rampes 82 munies d'un talon 85 adapté à coopérer avec les rampes 84 de moyens de contre-rampes 83 munis également d'un talon 86 adapté à coopérer avec les rampes 82 des moyens à rampes 81 ; les moyens à rampes 81 et de contre-rampes 83 sont classiquement sollicités en déplacement circonférentiel relatif les uns par rapport aux autres par un ressort hélicoïdal 87, constituant le moyen d'actionnement du dispositif de rattrapage d'usure, dans le sens de l'augmentation de l'épaisseur axiale de l'ensemble moyens à rampes-moyens de contre rampes ; les talons 85 et 86 sont à une distance circonférentielle l'un de l'autre, à l'état initial garnitures neuves, figure 15, qui correspond à l'épaisseur usée des garnitures que l'on souhaite compenser ; lorsque cette distance est absorbée lors du rattrapage, les talons 85 et 86 viennent en butée l'un contre l'autre, figure 16, les moyens à rampes 81 ne pouvant dès lors si déplacer par rapport aux moyens de contre-rampes 83 : le dispositif de rattrapage d'usure est hors-circuit, l'embrayage se comportant alors classiquement du point de vue de l'usure.

Selon la variante des figures 17 et 18, les moyens de mise hors-circuit sont constitués par des plats 88,89 transversaux qui prolongent les rampes 82,84 des moyens à rampes 81 et de contre-rampes 83 ; les plats 88,89 sont à une distance circonférentielle l'un de l'autre, à l'état initial garnitures neuves, figure 17, qui correspond à l'épaisseur usée des garnitures que l'on souhaite compenser ; lorsque cette distance est absorbée lors du rattrapage, les plats 88,89 transversaux coopèrent, figure 18, en sorte qu'un déplacement relatif supplémentaire en rotation des moyens à rampes 81 et de contre-rampes 83 n'a pas d'influence sur leur épaisseur axiale qui demeure constante : le dispositif de rattrapage d'usure est hors-circuit, l'embrayage se comportant alors classiquement du point de vue de l'usure.

Avantageusement, le ressort 87, formant moyen d'actionnement, qui sollicite en déplacement relatif en rotation les moyens à rampes 81 et de contre-rampes 83 dans le sens de leur écartement axial est attelé auxdits moyens en des points d'attelage 90,91 placés au droit des plats 88,89 transversaux ; grâce à cette disposition, lorsque les plats 88,89 transversaux coopèrent et que le dispositif de rattrapage d'usure est hors-circuit, le ressort 87 n'exerce qu'un faible couple de rotation relative entre les moyens à rampes 81 et de contre-rampes 83.

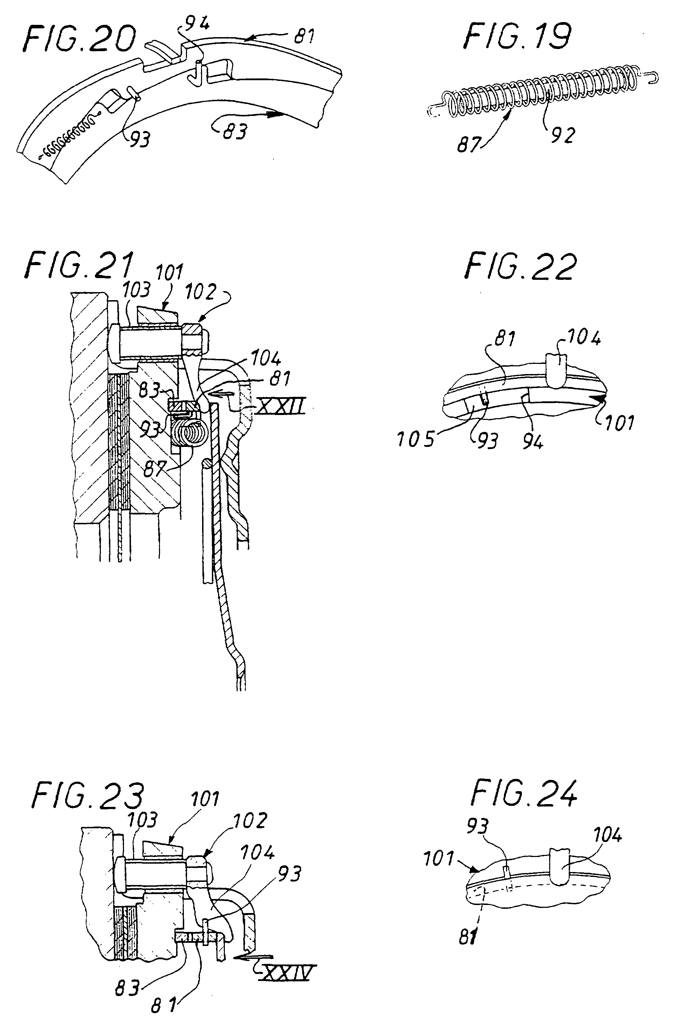

Selon la variante de la figure 19, les moyens à rampes et de contre-rampes n'étant pas représentés, le ressort 87 qui les sollicite en déplacement relatif en rotation dans le sens de leur écartement axial est un ressort hélicoïdal à l'intérieur duquel est placée une tige 92 dont la longueur est inférieure à celle du ressort 87 dans son état expansé initial, garnitures neuves ; lorsque cette différence de longueur, qui correspond à l'épaisseur usée des garnitures que l'on souhaite compenser, est absorbée, les extrémités de la tige 92 viennent en contact avec les spires d'extrémités du ressort 87 avantageusement refermées ou avec les points d'attelage du ressort 87 en sorte que celui-ci est court-circuité, les moyens à rampes et de contre-rampes étant alors en butée l'un contre l'autre par l'intermédiaire de ladite tige 92 qui constitue donc les moyens de mise hors circuit du dispositif de rattrapage d'usure.

Selon la variante de la figure 20, les moyens de mise hors-circuit sont constitués par une butée 93 portée par les moyens à rampes 81, constituant le moyen de compensation, destinée à coopérer avec une contre-butée limitant leur déplacement en rotation ; ici la contre-butée 94 est portée par les moyens de contre-rampes 83 ; ici, la butée 93 et la contre-butée 94 sont placés latéralement par rapport auxdits moyens, la butée 93 s'étendant axialement et la contre-butée 94 ayant une portion s'étendant radialement avec laquelle est adaptée à coopérer la butée 93.

Les figures 21 à 24 montrent partiellement un embrayage du type décrit dans le document GB-A-2 294 983 auquel on se reportera pour plus de détails ; rappelons simplement qu'ici les moyens embrayeurs sont constitués par un diaphragme monté à articulation par rapport au couvercle, l'appui décalable étant l'appui plateau de pression et l'embrayage du type poussé ; le moyen de détection 102 est constitué d'une goupille 103 traversant le plateau de pression 101 avec frottement et portant un bras 104 coopérant avec les moyens à rampes 81 en limitant la rotation de ceux-ci à chaque opération de rattrapage, les moyens de contre-rampes 83 étant solidaires, axialement et angulairement, du plateau de pression 101.

Selon l'invention, les moyens à rampes 81 portent une butée 93 ; selon les figures 21,22 la contre-butée 94 avec laquelle est adaptée à coopérer la butée 93 est constituée par le plateau de pression 101 lui-même à la faveur d'un embrèvement 105 que présente celui-ci ; selon les figures 23,24 la contre-butée est constituée par une pièce solidaire du plateau de pression 101, ici le bras 104.

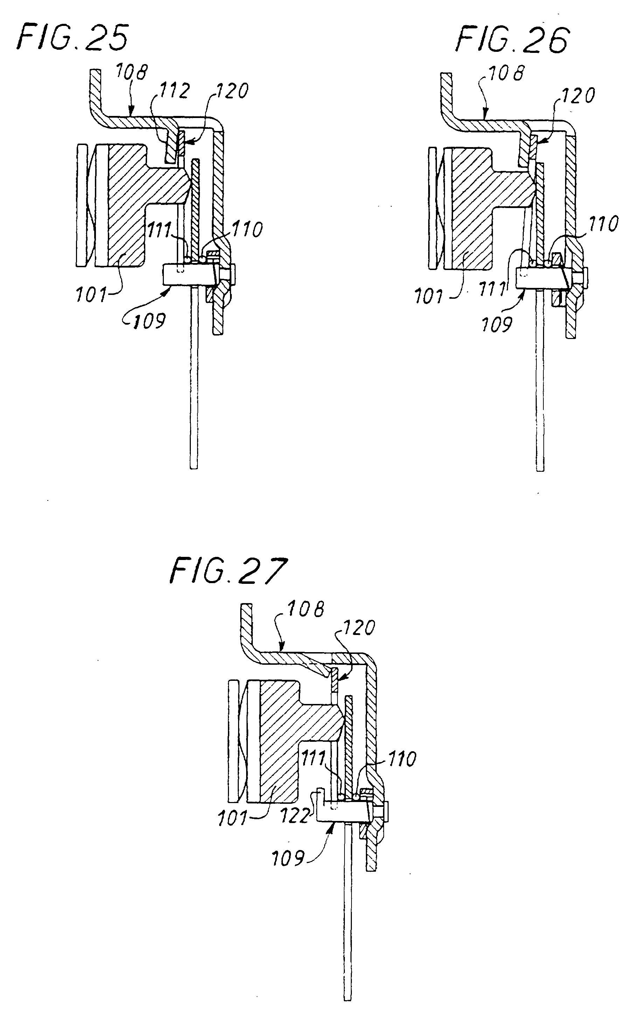

Les figures 25 à 27 montrent partiellement un embrayage du type décrit dans le document GB-A-2 294 301, figures 15 à 17, auquel on se reportera pour plus de détails ; rappelons simplement qu'ici également les moyens embrayeurs sont constitués par un diaphragme monté à articulation par rapport au couvercle, l'embrayage étant du type poussé ; ici, ce montage à articulation comprend un appui primaire 110 côté couvercle et un appui secondaire 111, côté plateau de pression 101, situé en vis-à-vis de l'appui primaire 110, les appuis primaire 110 et secondaire 111 étant portés par des colonnettes 109 réparties circonférentiellement solidaires du couvercle 108 ; ici, l'appui décalable est l'appui primaire 110 et le déclenchement est obtenu par affaissement de l'appui secondaire 111 qui coopère en appui avec un moyen élastique dit de déclenchement 120 lui-même en appui sur le couvercle 108.

Selon l'invention, la mise hors-circuit du dispositif de rattrapage d'usure est obtenue en limitant la course, d'affaissement, du moyen élastique de déclenchement 120.

Selon les figures 25 et 26, le moyen élastique de déclenchement 120, ici en forme de diaphragme, formant également moyen de détection, est en appui sur le couvercle 108 par l'intermédiaire d'une, ou plusieurs, patte 112 issue de la jupe cylindrique du couvercle 108 et s'étendant radialement à l'intérieur de celui-ci ; au fur et à mesure des opérations de rattrapage, les appuis 110 et 111 se déplacent vers le plateau de réaction et le moyen élastique de déclenchement 120 s'incline progressivement ; la patte 112 est inclinée en sorte que son angle d'inclinaison correspond à celui du moyen élastique de déclenchement 120 que l'on souhaite limiter, le dispositif de rattrapage d'usure étant alors hors-service, figure 26 ; les caractéristiques élastiques du moyen élastique de déclenchement 120 sont choisies telles que la raideur dudit moyen croît très rapidement avec son inclinaison de façon à constituer, dans sa position selon la figure 26, un appui ferme non affaissable pour l'appui secondaire 111.

Selon la figure 27, la course du moyen élastique de déclenchement 120 est limitée par une butée 122 portée par au moins une colonnette 122, au droit des appuis primaire 110 et secondaire 111, côté plateau de pression 101.

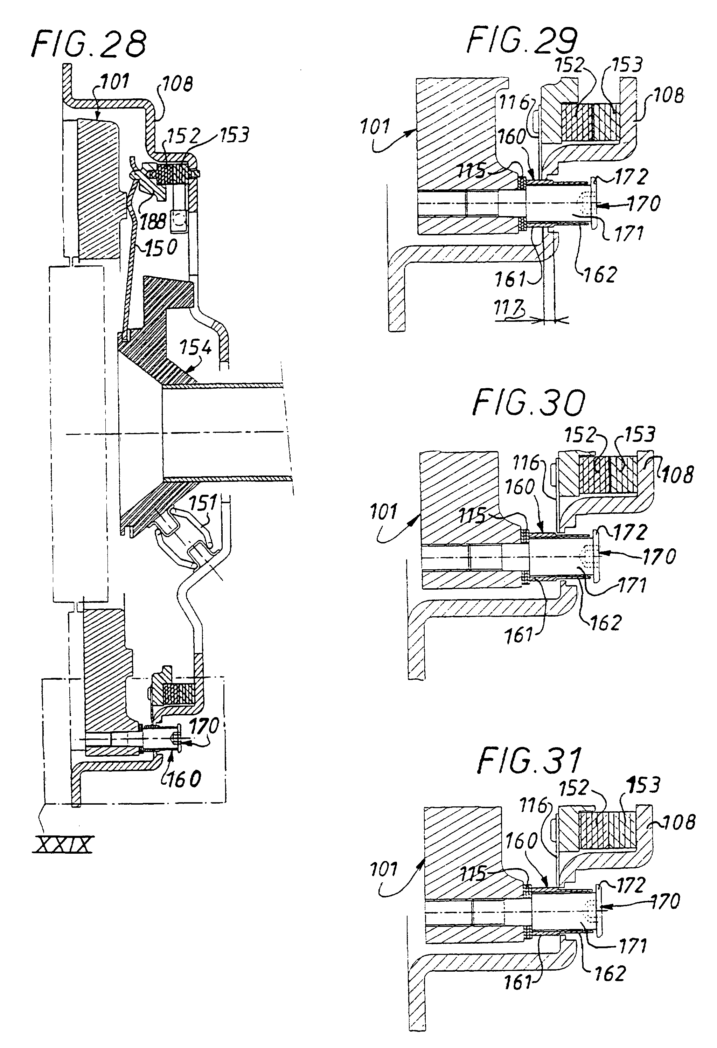

Les figures 28 à 35 montrent partiellement un embrayage du type décrit dans le document US-A-5 564 541, figures 1 à 9, auquel on se reportera pour plus de détails.

Ici, l'embrayage est du type tiré ; les moyens embrayeurs sont constitués de leviers 150 de débrayage associés à des ressorts hélicoïdaux 151 prenant appui sur le couvercle 108, d'une part, et sur une pièce de commande de débrayage 154 à laquelle sont attelés les leviers 150 par leur extrémité interne.

Par leur extrémité externe, les leviers 150 s'articulent sur une couronne 188 qui porte des moyens à rampes 152 qui coopèrent avec des moyens de contre-rampes 153 : c'est donc l'appui côté couvercle 108 qui est décalable ; la couronne 188 est attelée au couvercle par des languettes élastiques tangentielles 116 sollicitant axialement en appui les uns sur les autres les moyens à rampes 152 et de contre-rampes 153.

Ici, en référence aux figures 28 à 31, le moyen de détection est constitué d'une goupille 160, mieux visible sur la figure 29, montée avec jeu autour du corps cylindrique 171 d'une vis épaulée 170, à tête 172, vissée dans le plateau de pression 101, pour le maintien sur celui-ci des languettes de rappel 116 classiques s'étendant tangentiellement.

La goupille 160 traverse le couvercle 108 avec frottement ; plus précisément, elle présente sur sa face cylindrique externe une portée de frottement 161 avec laquelle elle coopère en frottement avec le couvercle 108, lequel frottement étant tel que l'effort nécessaire au coulissement de la goupille 160 par rapport au couvercle 108 est supérieur à l'effort de rappel axial du plateau de pression 101 par les languettes de rappel 115 mais inférieur à la charge axiale des moyens embrayeurs 151.

La portée de frottement 161 est suivie d'une queue cylindrique 162 de plus petit diamètre ; ainsi, la longueur axiale de la portée de frottement 161 est inférieure à celle de la goupille 160 qui comprend la longueur de cette portée 161 et celle de la queue 162 ; la longueur de la goupille 160 est légèrement inférieure à la distance qui sépare les faces en regard des languettes 115 et de la tête 172 de la vis 170 en sorte qu'un jeu axial est ménagé autorisant une levée du plateau de pression 101 égale audit jeu axial.

Par construction, les longueurs évoquées ci-dessus sont telles que, lorsque l'embrayage est désengagé, garnitures neuves, figure 29, une certaine longueur 117, repérée sur cette figure, est définie : elle correspond à l'épaisseur usée des garnitures que l'on souhaite compenser ; lorsque cette longueur 117 est absorbée, la figure 31 montrant l'instant où ceci vient juste d'être obtenu, la goupille 160 est libre par rapport au couvercle 108, en position de dégagement ; dès lors, le dispositif de rattrapage d'usure est hors-circuit et l'embrayage fonctionne comme habituellement, figure 30.

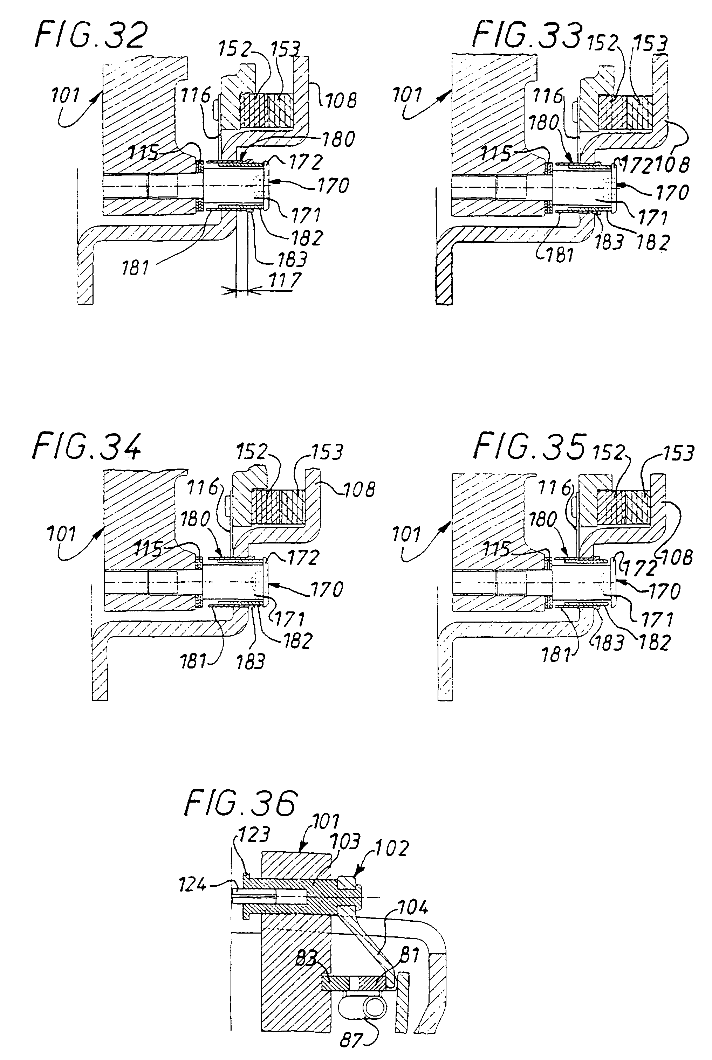

Les figures 32 à 35 montrent une variante de moyens de mise hors-circuit applicable par exemple à un embrayage tel que celui de la figure 28.

Ici, le moyen de détection est une goupille 180 en deux pièces : une pièce externe 181 traversant le couvercle 108 avec frottement et entourant une pièce interne 182 montée, d'une part, avec frottement à l'intérieur de la pièce externe 181 et, d'autre part, avec jeu autour du corps cylindrique 171 de la vis épaulée 170 à tête 172 ; la pièce externe 181 dépasse la pièce interne 182 côté plateau de pression 101 tandis que celle-ci dépasse la pièce externe 181 côté tête 172 : ainsi, c'est la pièce externe 181 qui est adaptée à recevoir en butée le plateau de pression 101 par l'intermédiaire des languettes 115, et la pièce interne 182 qui est adaptée à recevoir en butée la tête 172 de la vis 172, la longueur totale de la goupille 180 étant, là aussi, légèrement inférieure à la distance axiale qui sépare les faces en regard des languettes 115 et de la tête 172.

Ici, l'effort nécessaire au coulissement de la pièce interne 182 par rapport à la pièce externe 181 est supérieur à celui de la pièce externe 181 par rapport au couvercle 108, lesquels sont bien entendu supérieurs à la force de rappel des languettes 115 et inférieurs à la charge des moyens embrayeurs.

A son extrémité située entre le couvercle 108 et la tête 172 de vis 170, la partie externe 181 présente un rebord 183 destiné à venir en butée contre le couvercle 108 ; le positionnement initial des pièces et leur dimensionnement sont tels qu'à l'état embrayé, garnitures neuves, figure 32, une certaine longueur 117 est définie, repérée sur cette figure : elle correspond à l'épaisseur usée des garnitures que l'on souhaite compenser ; lorsque cette longueur 117 est absorbée, le rebord 183 est en butée contre le couvercle 108, figure 33, et la partie externe 181 ne peut plus se déplacer par rapport audit couvercle 108 ; la goupille 180 ne joue plus son rôle de moyen de détection ; l'embrayage fonctionne alors comme habituellement, sans rattrapage d'usure, la pièce interne 182 se déplaçant par rapport à la pièce externe 181 ; les figures 34 et 35 illustrent ce fonctionnement sans rattrapage, l'embrayage étant en position embrayé sur la figure 34 et débrayé sur la figure 35.

L'invention qui vient d'être décrite à propos des figures 28 à 35 est applicable à une variante d'embrayage du type décrit à la figure 10 du document US-A-5 564 541 déjà cité.

Selon cette variante, le moyen de détection est une goupille traversant le plateau de pression avec frottement.

Ainsi, selon une variante non représentée, un embrayage, du genre de celui représenté à la figure 10 du document US-A-5 564 541, est du type tiré et l'appui décalable l'appui couvercle, le moyen de détection étant constitué d'une goupille disposée avec jeu axial entre deux butées, l'une solidaire du plateau de réaction, l'autre du couvercle, et traversant le plateau de pression avec frottement, selon une portée dite de frottement, caractérisé par le fait que la longueur de la portée de frottement est inférieure à celle de la goupille en sorte que la goupille est libre par rapport au plateau de pression lorsque le plateau de pression est en position de dégagement, les garnitures étant usées d'une quantité choisie inférieure à l'usure totale possible.

Selon une autre variante non représentée, un embrayage, du genre de celui représenté à la figure 10 du document US-A-5 564 541, est du type tiré et l'appui décalable l'appui couvercle, le moyen de détection étant constitué d'une goupille disposée avec jeu axial entre deux butées, l'une solidaire du plateau de réaction, l'autre du couvercle, et traversant le plateau de pression avec frottement, selon une portée dite de frottement, caractérisé par le fait que la goupille est en deux pièces l'une, externe, entourant l'autre, interne, la pièce externe traversant le plateau de pression avec frottement et la pièce interne étant montée avec frottement à l'intérieur de la pièce externe, la pièce externe étant munie d'un rebord destiné à coopérer en butée avec le plateau de pression en sorte qu'alors elle n'est plus déplaçable par rapport au plateau de pression et ne joue plus son rôle de moyen de détection.

La figure 36 montre une variante d'embrayage du type décrit à propos de la figure 21 ; l'embrayage est du type poussé, les moyens embrayeurs sont un diaphragme articulé sur le couvercle et l'appui décalable est l'appui plateau de pression ; le moyen de détection 102 est constitué d'une goupille 103 traversant le plateau de pression 101 avec frottement et portant un bras 104 coopérant avec les moyens à rampes 81 et servant de butée de contrôle du rattrapage, lors du débrayage ; ici, la goupille 103 présente un rebord 123, à son extrémité située entre le plateau de pression 101, qu'elle dépasse, et le plateau de réaction ; un tel rebord 123 venu en butée contre le plateau de pression 101 met fin à la détection, l'embrayage fonctionnant alors comme habituellement, sans rattrapage ; pour que ce fonctionnement habituel se fasse sans blocage, la goupille 103 étant amenée, pour jouer son rôle de détection, à venir en butée avec le plateau de réaction, bute ici contre celui-ci par l'intermédiaire d'un pion 124 qu'elle porte à coulissement, l'effort de coulissement nécessaire pour déplacer le pion 124 par rapport à la goupille 103 étant supérieur à l'effort de frottement de la goupille 103 par rapport au plateau de pression 101.

## Revendications

1. Embrayage à friction, en particulier pour véhicule automobile, du genre comportant un plateau de réaction (202) destiné à être calé en rotation sur un arbre menant, un disque de friction (200), portant à sa périphérie externe des garnitures de friction (201), destiné à être calé en rotation sur un arbre mené, un plateau de pression (1;51;101), un couvercle (2;52;108) fixé sur le plateau de réaction (202), des moyens embrayeurs à action axiale (3;53;150-151) qui sont commandés par des moyens débrayeurs et qui agissent entre, d'une part, le couvercle (2;52;108) et, d'autre part, le plateau de pression (1;51;101) par l'intermédiaire de moyens d'appui (14), le plateau de pression (1;51;101) étant solidaire en rotation du couvercle (2;52;108) tout en pouvant se déplacer axialement par rapport à lui et étant soumis à l'action de moyens élastiques de rappel (9) rappelant le plateau de pression (1;51;101) axialement vers le couvercle (2;52;108), ledit embrayage comportant également un dispositif de rattrapage d'usure, l'un des appuis des moyens embrayeurs étant décalable axialement et le dispositif de rattrapage d'usure comportant un moyen de compensation, mis en oeuvre par un moyen d'actionnement, prévu pour réaliser ce décalage, ledit moyen d'actionnement étant commandé par un moyen de déclenchement en association avec un moyen de détection, sensible à l'usure des garnitures, agissant sur l'un au moins des moyens d'actionnement, de compensation et de déclenchement, **caractérisé par le fait que** le dispositif de rattrapage d'usure comprend également des moyens, dits moyens de mise hors circuit, le mettant hors circuit avant usure totale des garnitures, adaptés à agir sur l'un des éléments du groupe constitué par le moyen de compensation, le moyen d'actionnement, le moyen de déclenchement et le moyen de détection.

2. Embrayage à friction selon la revendication 1, **caractérisé par le fait que** le moyen de compensation comprend des moyens à rampes (11;54;81) disposées circonférentiellement, placés axialement entre les moyens d'appui (14) et le plateau de pression (1;51;101), lesdits moyens à rampes (11,54,81) étant adaptés à coopérer avec des moyens de contre-rampes (4, 57,83).

3. Embrayage à friction selon la revendication 2, **caractérisé par le fait que** les moyens de mise hors-circuit sont constitués par un talon (85,86) que présente au moins l'une des rampes (82,84) des moyens à rampes (81) et des moyens de contre-rampes (83), le talon (85) des moyens à rampes (81) et le talon (86) des moyens de contre-rampes (83) étant adaptés à venir en butée pour limiter le déplacement relatif en rotation des moyens à rampes (81) par rapport aux moyens de contre-rampes (83).

4. Embrayage à friction selon la revendication 2, **caractérisé par le fait que** les moyens de mise hors-circuit sont constitués par des plats (88,89) transversaux qui prolongent les rampes (82,84) des moyens à rampes (81) et des moyens de contre-rampes (83), les plats (88,89) transversaux des moyens à rampes (81) et de contre-rampes (83) étant adaptés à coopérer après un certain déplacement relatif en rotation des moyens à rampes (81) par rapport aux moyens de contre-rampes (83), en sorte que, lorsque lesdits plats (88,89) transversaux coopèrent, un déplacement relatif supplémentaire en rotation n'écarte pas axialement les moyens à rampes (81) des moyens de contre-rampes (83).

5. Embrayage à friction selon la revendication 4, dans lequel les moyens à rampes (81) et les moyens de contre-rampes (83) sont sollicités en déplacement relatif en rotation dans le sens de leur écartement axial par un ressort (87) de traction attelé par ses extrémités à chacun desdits moyens (81,83), **caractérisé par le fait que** les points d'attelage (90,91) dudit ressort (87) sont placés au droit des plats (88,89) transversaux en sorte que, lorsque ceux-ci coopèrent, ledit ressort (87) n'exerce qu'un faible couple de rotation relative entre les moyens à rampes (81) et les moyens de contre-rampes (83).

6. Embrayage à friction selon la revendication 2, dans lequel les moyens à rampes et les moyens de contre-rampes sont sollicités en déplacement relatif en rotation dans le sens de leur écartement axial par un ressort (87) de traction attelé par ses extrémités à chacun desdits moyens, **caractérisé par le fait que** le ressort (87) est un ressort hélicoïdal et les moyens de mise hors-circuit sont constitués d'une tige (92) placée à l'intérieur dudit ressort (87) et dont la longueur est inférieure à la longueur du ressort (87) à l'état expansé correspondant à l'état initial, garnitures neuves, en sorte qu'après un certain déplacement relatif en rotation des moyens à rampes par rapport aux moyens de contre-rampes lesdits moyens sont en butée les uns par rapport aux autres par l'intermédiaire de ladite tige (92).

7. Embrayage à friction selon la revendication 2, **caractérisé par le fait que** les moyens de mise hors-circuit sont constitués par une butée (93) portée par les moyens à rampes (81) destinée à coopérer avec une contre-butée (94) pour limiter le déplacement en rotation desdits moyens (81).

8. Embrayage à friction selon la revendication 7, **caractérisé par le fait que** la contre-butée (94) est portée par les moyens de contre-rampes (83).

9. Embrayage à friction selon la revendication 7, dans lequel les moyens de contre-rampes (82) sont solidaires du plateau de pression (101), **caractérisé par le fait que** la contre-butée (94) est portée par le plateau de pression 101 ou par une pièce (104) solidaire en rotation dudit plateau de pression.

10. Embrayage à friction selon l'une des revendications 1 ou 2, **caractérisé par le fait que** ledit dispositif de rattrapage d'usure comprend une denture (18; 59) avec laquelle coopère une vis sans fin (13; 63) disposée tangentiellement, l'un des deux organes moyens à rampes (11; 54) et moyens de contre-rampes (4; 57) étant solidaire de ladite denture (18; 59), des moyens d'entraînement en rotation (20; 60) de la vis sans fin (13; 63) étant prévus, rendus opérationnels par l'usure des garnitures de friction lorsque l'embrayage est embrayé.

11. Embrayage à friction selon la revendication 10, **caractérisé par le fait que** les moyens embrayeurs à action axiale (3; 53) sont constitués par un diaphragme.

12. Embrayage à friction selon l'une des revendications 10 ou 11, **caractérisé par le fait que** la vis sans fin (13; 63) est montée déplaçable selon son axe en étant soumise à l'action d'un moyen élastique dit de rattrapage (40; 86) et les moyens d'entraînement en rotation (20; 60) de la vis sans fin (13; 63) sont constitués par une roue à rochet solidaire en rotation de la vis sans fin (13; 63).

13. Embrayage à friction selon l'une des revendications 10 à 12, **caractérisé par le fait que** les moyens d'entraînement en rotation (20; 60) de la vis sans fin (13;63) sont commandés par l'intermédiaire d'une languette de commande (35;76) dont la course, par rapport à la roue à rochet (20;60), lors de l'opération de débrayage, est limitée par une butée dite de contrôle (36A,73).

14. Embrayage à friction selon l'une des revendications 10 à 13, **caractérisé par le fait que** les moyens de mise hors circuit du dispositif de rattrapage d'usure consistent en ce que la longueur de la denture (18) avec laquelle coopère la vis sans fin (13) ne permet à celle-ci que d'opérer un rattrapage correspondant à une partie seulement de l'épaisseur des garnitures à user.

15. Embrayage à friction selon la revendication 14, **caractérisé par le fait qu'**il est prévu, en fin de denture (18), un embrèvement (30) déconnectant la vis sans fin (13) de la denture (18).

16. Embrayage à friction selon la revendication 2, dans lequel les moyens embrayeurs sont constitués par un diaphragme monté à articulation par rapport au couvercle entre deux appuis, un appui primaire (110) côté couvercle et un appui secondaire (111), côté plateau de pression (101), situé en vis-à-vis de l'appui primaire (110), l'embrayage étant du type poussé, l'appui décalable étant l'appui primaire (110) et le déclenchement obtenu par affaissement de l'appui secondaire (111) coopérant avec un moyen élastique dit de déclenchement (120) en appui sur le couvercle (108), **caractérisé par le fait que** les moyens de mise hors circuit sont constitués par une butée (112;122) limitant la course du moyen élastique de déclenchement (120).

17. Embrayage à friction selon la revendication 16, **caractérisé par le fait que** la butée (112) de mise hors circuit est ménagée sur le couvercle (108).

18. Embrayage à friction selon la revendication 16, dans lequel les appuis primaire (110) et secondaire (111) du diaphragme sont portés par des colonnettes (109) réparties circonférentiellement solidaires du couvercle (108), **caractérisé par le fait que** la butée (122) de mise hors circuit est ménagée sur au moins l'une desdites colonnettes (109).

19. Embrayage à friction selon la revendication 2, dans lequel l'embrayage est du type tiré et l'appui décalable l'appui couvercle, le moyen de détection étant constitué d'une goupille (160) disposée avec jeu axial entre deux butées (115;172) solidaires du plateau de pression (101) et traversant le couvercle (108) avec frottement, selon une portée dite de frottement (161), **caractérisé par le fait que** la longueur de la portée de frottement (161) est inférieure à celle de la goupille (160) en sorte que la goupille (160) est libre par rapport au couvercle (108) lorsque le plateau de pression (101) est en position de dégagement, les garnitures étant usées d'une quantité choisie inférieure à l'usure totale possible.

20. Embrayage à friction selon la revendication 2, dans lequel l'embrayage est du type tiré et l'appui décalable l'appui couvercle, le moyen de détection étant constitué d'une goupille (180) disposée avec jeu axial entre deux butées (115;172) solidaires du plateau de pression et traversant le couvercle (108) avec frottement, selon une portée dite de frottement, **caractérisé par le fait que** la goupille (180) est en deux pièces l'une (181), externe, entourant l'autre (182), interne, la pièce externe (181) traversant le couvercle (108) avec frottement et la pièce interne (182) étant montée avec frottement à l'intérieur de la pièce externe (181), la pièce externe (181) étant munie d'un rebord (183) destiné à coopérer en butée avec le couvercle (108) en sorte qu'alors elle n'est plus entraînée par le plateau de pression (101) et ne joue plus son rôle de moyen de détection.

21. Embrayage à friction selon la revendication 2, dans lequel l'embrayage est du type tiré et l'appui décalable l'appui couvercle, le moyen de détection étant constitué d'une goupille disposée avec jeu axial entre deux butées, l'une solidaire du plateau de réaction, l'autre du couvercle, et traversant le plateau de pression avec frottement, selon une portée dite de frottement, **caractérisé par le fait que** la longueur de la portée de frottement est inférieure à celle de la goupille en sorte que la goupille est libre par rapport au plateau de pression lorsque le plateau de pression est en position de dégagement, les garnitures étant usées d'une quantité choisie inférieure à l'usure totale possible.

22. Embrayage à friction selon la revendication 2, dans lequel l'embrayage étant du type tiré et l'appui décalable l'appui couvercle, le moyen de détection étant constitué d'une goupille disposée avec jeu axial entre deux butées, l'une solidaire du plateau de réaction, l'autre du couvercle, et traversant le plateau de pression avec frottement, selon une portée dite de frottement, **caractérisé par le fait que** la goupille est en deux pièces l'une, externe, entourant l'autre, interne, la pièce externe traversant le plateau de pression avec frottement et la pièce interne étant montée avec frottement à l'intérieur de la pièce externe, la pièce externe étant munie d'un rebord destiné à coopérer en butée avec le plateau de pression en sorte qu'alors elle n'est plus déplaçable par rapport au plateau de pression et ne joue plus son rôle de moyen de détection.

23. Embrayage à friction selon l'une des revendications 19 à 22, **caractérisé par le fait que** les moyens embrayeurs sont constitués de leviers (150) de débrayage associés à des ressorts hélicoïdaux (151) prenant appui sur le couvercle (108).

24. Embrayage à friction selon la revendication 2, dans lequel les moyens embrayeurs sont constitués par un diaphragme monté à articulation par rapport au couvercle, l'appui décalable étant l'appui plateau de pression, l'embrayage étant du type poussé, le moyen de détection (102) étant constitué d'une goupille (103) traversant le plateau de pression (101) avec frottement et portant un bras (104) coopérant avec les moyens à rampes (81) en limitant la rotation de ceux-ci à chaque opération de rattrapage, **caractérisé par le fait que** la goupille (103) présente un rebord (123) limitant son déplacement par rapport au plateau de pression (101) par venue en butée dudit rebord (123) contre le plateau de pression (101) en sorte qu'alors elle ne joue plus son rôle de moyen de détection.

25. Embrayage à friction selon la revendication 24, **caractérisé par le fait que** la goupille (103) est adaptée à venir buter contre le plateau de réaction par l'intermédiaire d'un pion (124) qu'elle porte à coulissement, l'effort de coulissement étant supérieur à l'effort de frottement de la goupille (103) par rapport au plateau de pression (101).

26. Embrayage à friction selon l'une des revendications 1 à 25, **caractérisé par le fait que** des moyens d'avertissement sont prévus pour avertir de la mise hors circuit du dispositif de rattrapage d'usure.

## Patentansprüche

1. Reibungskupplung, insbesondere für Kraftfahrzeuge, umfassend eine Gegenanpreßplatte (202), die zur drehfesten Anbringung an einer treibenden Welle bestimmt ist, eine Kupplungsscheibe (200), die an ihrem äußeren Umfang Reibbeläge (201) trägt und die zur drehfesten Anbringung an einer getriebenen Welle bestimmt ist, eine Druckplatte (1, 51, 151), einen an der Gegenanpreßplatte (202) befestigten Deckel (2, 52, 108) und axial wirksame Einrückmittel (3, 53, 150-151), die durch Ausrückmittel betätigt werden und die zwischen dem Deckel (2, 52, 108) einerseits und der Druckplatte (1, 51, 101) andererseits über Auflagemittel (14) wirken, wobei die Druckplatte (1, 51, 101) drehfest mit dem Deckel (2, 52, 108) verbunden ist, während sie sich axial im Verhältnis zu diesem verschieben kann, und der Wirkung von elastischen Rückstellmitteln (9) ausgesetzt ist, die die Druckplatte (1, 51, 101) axial zum Deckel (2, 52, 108) hin zurückstellen, wobei die besagte Kupplung außerdem eine Verschleißnachstellvorrichtung umfaßt, wobei eine der Auflagen der Einrückmittel axial versetzbar ist und wobei die Verschleißnachstellvorrichtung ein Ausgleichmittel umfaßt, das durch ein Betätigungsmittel eingeschaltet wird und vorgesehen ist, um diesen Versatz auszuführen, wobei das besagte Betätigungsmittel durch ein Auslösemittel in Verbindung mit einem Erfassungsmittel gesteuert wird, das für den Verschleiß der Reibbeläge empfindlich ist und auf wenigstens eines der Betätigungs-, Ausgleich- und Auslösemittel einwirkt, **dadurch gekennzeichnet, daß** die Verschleißnachstellvorrichtung außerdem als Abschaltmittel bezeichnete Mittel umfaßt, die sie vor dem vollständigen Verschleiß der Reibbeläge abschalten und die auf eines der Elemente der Gruppe einwirken können, die aus dem Ausgleichmittel, dem Betätigungsmittel, dem Auslösemittel und dem Erfassungsmittel besteht.

2. Reibungskupplung nach Anspruch 1 , **dadurch gekennzeichnet, daß** das Ausgleichmittel Rampenmittel (11, 54, 81) umfaßt, die umfangsmäßig angeordnet und axial zwischen den Auflagemitteln (14) und der Druckplatte (1, 51, 101) angebracht sind, wobei die besagten Rampenmittel (11, 54, 81) mit Gegenrampenmitteln (4, 57, 83) zusammenwirken können.

3. Reibungskupplung nach Anspruch 2 , **dadurch gekennzeichnet, daß** die Abschaltmittel durch eine Nase (85, 86) gebildet werden, die wenigstens eine der Rampen (82, 84) der Rampenmittel (81) und der Gegenrampenmittel (83) aufweist, wobei die Nase (85) der Rampenmittel (81) und die Nase (86) der Gegenrampenmittel (83) in Anschlag kommen können, um die relative Drehbewegung der Rampenmittel (81) im Verhältnis zu den Gegenrampenmitteln (83) zu begrenzen.

4. Reibungskupplung nach Anspruch 2, **dadurch gekennzeichnet, daß** die Abschaltmittel aus Querflachstücken (88, 89) bestehen, die die Rampen (82, 84) der Rampenmittel (81) und der Gegenrampenmittel (83) verlängern, wobei die Querflachstücke (88, 89) der Rampenmittel (81) und Gegenrampenmittel (83) nach einer bestimmten relativen Drehbewegung der Rampenmittel (81) im Verhältnis zu den Gegenrampenmitteln (83) zusammenwirken können, so daß beim Zusammenwirken der besagten Querflachstücke (88, 89) eine zusätzliche relative Drehbewegung die Rampenmittel (81) nicht axial von den Gegenrampenmitteln (83) entfernt.

5. Reibungskupplung nach Anspruch 4, bei der die Rampenmittel (81) und die Gegenrampenmittel (83) auf eine relative Drehbewegung in Richtung ihrer axialen Entfernung durch eine Zugfeder (87) beaufschlagt werden, die durch ihre Enden an jedes der besagten Mittel (81,83) angefügt ist, **dadurch gekennzeichnet, daß** die Anfügestellen (90, 91) der besagten Feder (87) in Höhe der Querflachstücke (88, 89) angeordnet sind, so daß bei deren Zusammenwirken die besagte Feder (87) nur ein geringes relatives Drehmoment zwischen den Rampenmitteln (81) und den Gegenrampenmitteln (83) ausübt.

6. Reibungskupplung nach Anspruch 2, bei der die Rampenmittel und die Gegenrampenmittel auf eine relative Drehbewegung in Richtung ihrer axialen Entfernung durch eine Zugfeder (87) beaufschlagt werden, die durch ihre Enden an jedes der besagten Mittel angefügt ist, **dadurch gekennzeichnet, daß** die Feder (87) eine Schraubenfeder ist und die Abschaltmittel aus einem Stab (92) bestehen, der im Innern der besagten Feder (87) angebracht ist und dessen Länge kleiner als die Länge der Feder (87) im expandierten Zustand ist, der dem Ausgangszustand mit neuen Reibbelägen entspricht, so daß nach einer bestimmten relativen Drehbewegung der Rampenmittel im Verhältnis zu den Gegenrampenmitteln die besagten Mittel über den besagten Stab (92) aneinander zum Anschlag kommen.

7. Reibungskupplung nach Anspruch 2 , **dadurch gekennzeichnet, daß** die Abschaltmittel aus einem an den Rampenmitteln (81) angebrachten Anschlag (93) bestehen, der dazu bestimmt ist, mit einem Gegenanschlag (94) zusammenzuwirken, um die Drehbewegung der besagten Mittel (81) zu begrenzen.

8. Reibungskupplung nach Anspruch 7 , **dadurch gekennzeichnet, daß** der Gegenanschlag (94) an den Gegenrampenmitteln (83) angebracht ist.

9. Reibungskupplung nach Anspruch 7, bei der die Gegenrampenmittel (82) fest mit der Druckplatte (101) verbunden sind, **dadurch gekennzeich-net, daß** der Gegenanschlag (94) an der Druckplatte (101) oder an einem drehfest mit der besagten Druckplatte verbundenen Teil (104) angebracht ist.

10. Reibungskupplung nach einem der Ansprüche 1 oder 2, **dadurch gekennzeichnet, daß** die besagte Verschleißnachstellvorrichtung eine Zahnung (18, 59) umfaßt, mit der eine tangential angeordnete Schnecke (13, 63) zusammenwirkt, wobei eines der beiden Organe Rampenmittel (11, 54) und Gegenrampenmittel (4, 57) fest mit der besagten Zahnung (18, 59) verbunden ist, wobei Drehantriebsmittel (20, 60) für die Schnecke (13, 63) vorgesehen sind, die durch den Verschleiß der Reibbeläge bei eingerückter Kupplung betriebsbereit werden.

11. Reibungskupplung nach Anspruch 10, **dadurch gekennzeichnet, daß** die axial wirksamen Einrückmittel (3, 53) aus einer Membranfeder bestehen.

12. Reibungskupplung nach einem der Ansprüche 10 oder 11, **dadurch gekennzeichnet, daß** die Schnecke (13, 63) entlang ihrer Achse verschiebbar gelagert und der Einwirkung eines sogenannten elastischen Nachstellmittels (40, 86) ausgesetzt ist und die Drehantriebsmittel (20, 60) der Schnecke (13, 63) aus einem drehfest mit der Schnecke (13, 63) verbundenen Sperrzahnrad (13, 63) bestehen.

13. Reibungskupplung nach einem der Ansprüche 10 bis 12, **dadurch gekennzeichnet, daß** die Drehantriebsmittel (20, 60) der Schnecke (13, 63) über eine Betätigungszunge (35, 76) betätigt werden, deren Betätigungsweg im Verhältnis zum Sperrzahnrad (20, 60) beim Ausrückvorgang durch einen sogenannten Kontrollanschlag (36A, 73) begrenzt wird.

14. Reibungskupplung nach einem der Ansprüche 10 bis 13, **dadurch gekennzeichnet, daß** die Abschaltmittel der Verschleißnachstellvorrichtung darin bestehen, daß die Länge der Zahnung (18), mit der die Schnecke (13) zusammenwirkt, es dieser nur ermöglicht, eine Verschleißnachstellung auszuführen, die nur einem Teil der Verschleißdicke der Reibbeläge entspricht.

15. Reibungskupplung nach Anspruch 14, **dadurch gekennzeichnet, daß** am Ende der Zahnung ein Versatz (30) vorgesehen ist, der die Schnecke (13) von der Zahnung (18) trennt.

16. Reibungskupplung nach Anspruch 2, bei der die Einrückmittel aus einer Membranfeder bestehen, die im Verhältnis zum Deckel gelenkig zwischen zwei Auflagen gelagert ist, einer Primärauflage (110) auf der Seite des Deckels und einer gegenüber der Primärauflage (110) angeordnete Sekundärauflage (111) auf der Seite der Druckplatte (101), wobei die Kupplung in gedrückter Konstruktion ausgeführt ist, wobei die versetzbare Auflage die Primärauflage (110) ist und die Auslösung durch das Eindrücken der Sekundärauflage (111) erfolgt, die mit einem sogenannten elastischen Auslösemittel (120) in Anlage auf dem Deckel (108) zusammenwirkt, **dadurch gekennzeichnet, daß** die Abschaltmittel durch einen Anschlag (112, 122) gebildet werden, der den Betätigungsweg des elastischen Auslösemittels (120) begrenzt.

17. Reibungskupplung nach Anspruch 16, **dadurch gekennzeichnet, daß** der Abschaltanschlag (112) auf dem Deckel (108) ausgebildet ist.

18. Reibungskupplung nach Anspruch 16, bei der die Primär- (110) und Sekundärauflage (111) der Membranfeder an umfangsmäßig verteilten und fest mit dem Deckel (108) verbundenen Distanzbolzen (109) angebracht sind , **dadurch gekennzeichnet, daß** der Abschaltanschlag (122) auf wenigstens einem der besagten Distanzbolzen (109) ausgebildet ist.

19. Reibungskupplung nach Anspruch 2, bei der die Kupplung in gezogener Konstruktion ausgeführt und die versetzbare Auflage die deckelseitige Auflage ist, während das Erfassungsmittel aus einem Stift (160) besteht, der mit axialem Spiel zwischen zwei fest mit der Druckplatte (101) verbundenen Anschlägen (115, 172) angeordnet ist und reibschlüssig entlang einer sogenannten Reibauflagefläche (161) durch den Deckel (108) hindurchgeht, **dadurch gekennzeichnet, daß** die Länge der Reibauflagefläche (161) kleiner als die Stifts (160) ist, so daß der Stift (160) im Verhältnis zum Deckel (108) frei beweglich ist, wenn sich die Druckplatte (101) in der Ausrückposition befindet und die Reibbläge um ein ausgewähltes Verschleißmaß abgenutzt sind, das kleiner als der mögliche Gesamtverschleiß ist.

20. Reibungskupplung nach Anspruch 2, bei der die Kupplung in gezogener Konstruktion ausgeführt und die versetzbare Auflage die deckelseitige Auflage ist, während das Erfassungsmittel aus einem Stift (180) besteht, der mit axialem Spiel zwischen zwei fest mit der Druckplatte (101) verbundenen Anschlägen (115, 172) angeordnet ist und reibschlüssig entlang einer sogenannten Reibauflagefläche (161) durch den Deckel (108) hindurchgeht , **dadurch gekenn** **zeichnet,** daß der Stift (180) aus zwei Teilen besteht, von denen einer (181), der äußere, den anderen (182), den inneren, umgibt, wobei der äußere Teil (181) reibschlüssig durch den Deckel (108) hindurchgeht und der innere Teil (182) reibschlüssig im Innern des äußeren Teils (181) gelagert ist, wobei der äußere Teil (181) mit einer Randleiste (183) versehen ist, die dazu bestimmt ist, anschlagmäßig mit dem Deckel (108) zusammenzuwirken, so daß er nicht mehr durch die Druckplatte (101) mitgenommen wird und seine Funktion als Erfassungsmittel nicht mehr ausübt.

21. Reibungskupplung nach Anspruch 2, bei der die Kupplung in gezogener Konstruktion ausgeführt und die versetzbare Auflage die deckelseitige Auflage ist, während das Erfassungsmittel aus einem Stift besteht, der mit axialem Spiel zwischen zwei Anschlägen angeordnet ist, von denen einer fest mit der Gegenanpreßplatte und der andere mit dem Deckel verbunden ist, und der reibschlüssig entlang einer sogenannten Reibauflagefläche durch die Druckplatte hindurchgeht, **dadurch gekennzeichnet, daß** die Länge der Reibauflagefläche kleiner als die Länge des Stifts ist, wenn sich die Druckplatte in der Ausrückposition befindet und die Reibbläge um ein ausgewähltes Verschleißmaß abgenutzt sind, das kleiner als der mögliche Gesamtverschleiß ist.

22. Reibungskupplung nach Anspruch 2, bei der die Kupplung in gezogener Konstruktion ausgeführt und die versetzbare Auflage die deckelseitige Auflage ist, während das Erfassungsmittel aus einem Stift besteht, der mit axialem Spiel zwischen zwei Anschlägen angeordnet ist, von denen einer fest mit der Gegenanpreßplatte und der andere mit dem Deckel verbunden ist, und der reibschlüssig entlang einer sogenannten Reibauflagefläche durch die Druckplatte hindurchgeht, **dadurch gekennzeichnet, daß** der Stift aus zwei Teilen besteht, von denen einer, der äußere, den anderen, den inneren, umgibt, wobei der äußere. Teil reibschlüssig durch die Druckplatte hindurchgeht und der innere Teil reibschlüssig im Innern des äußeren Teils gelagert ist, wobei der äußere Teil mit einer Randleiste versehen ist, die dazu bestimmt ist, anschlagmäßig mit der Druckplatte zusammenzuwirken, so daß er nicht mehr durch die Druckplatte verschiebbar ist und seine Funktion als Erfassungsmittel nicht mehr ausübt.

23. Reibungskupplung nach einem der Ansprüche 19 bis 22, **dadurch gekennzeichnet, daß** die Einrückmittel aus Ausrückhebeln (150) bestehen, die mit Schraubenfedern (151) verbunden sind, die auf dem Deckel (108) zur Auflage kommen.

24. Reibungskupplung nach Anspruch 2, bei der die Einrückmittel aus einer Membranfeder bestehen, die im Verhältnis zum Deckel gelenkig gelagert ist, wobei die versetzbare Auflage die Auflage auf der Seite der Druckplatte ist und die Kupplung in gedrückter Konstruktion ausgeführt ist, während das Erfassungsmittel (102) aus einem Stift (103) besteht, der reibschlüssig durch die Druckplatte (101) hindurchgeht und einen Arm (104) trägt, der mit Rampenmitteln (81) zusammenwirkt, indem er deren Drehung bei jedem Verschleißnachstellvorgang begrenzt, **dadurch gekennzeichnet, daß** der Stift (103) eine Randleiste (123) aufweist, die seine Verschiebung im Verhältnis zur Druckplatte (101) durch das Anschlagen der besagten Randleiste (123) an der Druckplatte (101) begrenzt, so daß er dann seine Funktion als Erfassungsmittel nicht mehr ausübt.

25. Reibungskupplung nach Anspruch 24, **dadurch gekennzeichnet, daß** der Stift (103) an der Gegenanpreßplatte über ein Paßstück (124) zum Anschlag kommen kann, das er gleitend verschiebbar trägt, wobei die Gleitverschiebungskraft größer als die Reibbeanspruchung des Stifts (103) im Verhältnis zur Druckplatte (101) ist.

26. Reibungskupplung nach einem der Ansprüche 1 bis 25, **dadurch gekennzeichnet, daß** Warnanzeigemittel vorgesehen sind, um die Abschaltung der Verschleißnachstellvorrichtung anzuzeigen.

## Claims

1. Friction clutch, in particular for motor vehicles, of the kind including a reaction plate (202) adapted to be constrained to rotate with a driving shaft, a friction disc (200) carrying at its outside periphery friction linings (201) and adapted to be constrained to rotate with a driven shaft, a pressure plate (1, 51, 101), a cover (2, 52, 108) fixed to the reaction plate (202), axially acting clutch engaging means (3, 53, 150-151) which are operated by clutch release means and which are operative between the cover (2, 52, 108) and the pressure plate (1, 51, 101) through the intermediary of bearing means (14), the pressure plate (1, 51, 101) being constrained to rotate with the cover (2, 52, 108), able to move axially relative to the cover and operated on by return spring means (9) urging the pressure plate (1, 51, 101) axially towards the cover (2, 52, 108), said clutch further including a wear take-up device, one of the supports of the clutch engaging means being adapted to be offset axially and the wear take-up device including compensator means actuated by actuator means to bring about such offsetting, said actuator means being operated by trigger means in association with detector means responsive to the wear of the linings and operating on at least one of the actuator means, compensator means and trigger means, **characterized in that** the wear take-up device further includes disabling means for disabling it before the linings are totally worn, adapted to operate on one of the components of the group comprising the compensator means, the actuator means, the trigger means and the detector means.

2. Friction clutch according to claim 1 **characterized in that** the compensator means include ramp means (11, 54, 81) disposed circumferentially, placed axially between the bearing means (14) and the pressure plate (1, 51, 101), said ramp means (11, 54, 81) being adapted to cooperate with counter-ramp means (4, 57, 83).

3. Friction clutch according to claim 2 **characterized in that** the disabling means comprise a heel-piece (85, 86) on at least one of the ramps (82, 84) of the ramp means (81) and the counter-ramp means (83), the heel-piece (85) of the ramp means (81) and the heel-piece (86) of the counter-ramp means (83) being adapted to come into abutting relationship with each other to limit rotation of the ramp means (81) relative to the counter-ramp means (83).

4. Friction clutch according to claim 2 **characterized in that** the disabling means comprise transverse flats (88, 89) that extend the ramps (82, 84) of the ramp means (81) and the counter-ramp means (83), the transverse flats (88, 89) of the ramp means (81) and the counter-ramp means (83) being adapted to cooperate after a particular relative rotation of the ramp means (81) and the counter-ramp means (83) so that when said transverse flats (88, 89) cooperate with each other further relative rotation does not move the ramp means (81) axially away from the counter-ramp means (83).

5. Friction clutch according to claim 4 wherein the ramp means (81) and the counter-ramp means (83) are caused to rotate relative to each other in the direction that moves them axially away from each other by a tension spring (87) with its ends coupled to each of said means (81, 83), **characterized in that** the coupling points (90, 91) of said spring (87) are in line with the transverse flats (88, 89) so that when the latter cooperate said spring (87) applies only a low relative rotation torque to the ramp means (81) and the counter-ramp means (83).

6. Friction clutch according to claim 2 wherein the ramp means and the counter-ramp means are rotated relative to each other in the direction that moves them axially apart by a tension spring (87) with its ends coupled to each of said means, **characterized in that** the spring (87) is a coil spring and the disabling means comprise a rod (92) inside said spring (87) and the length of which is less than the length of the spring (87) in the expanded state corresponding to the initial state with new linings, so that after a particular relative rotation of the ramp means and the counter-ramp means said means are in abutting engagement with each other through the intermediary of said rod (92).

7. Friction clutch according to claim 2 **characterized in that** the disabling means comprise an abutment (93) carried by the ramp means (81) adapted to cooperate with a counter-abutment (94) to limit rotation of said means (81).

8. Friction clutch according to claim 7 **characterized in that** the counter-abutment (94) is carried by the counter-ramp means (83).

9. Friction clutch according to claim 7 wherein the counter-ramp means (82) are attached to the pressure plate (101) and **characterized in that** the counter-abutment (94) is carried by the pressure plate (101) or by a part (104) constrained to rotate with said pressure plate.

10. Friction clutch according to claim 1 or claim 2 **characterized in that** said wear take-up device comprises teeth (18, 59) with which cooperates a tangential lead screw (13, 63), either the ramp means (11, 54) or the counter-ramp means (4, 57) being attached to said teeth (18, 59), and means (20, 60) being provided for rotating the lead screw (13, 63) and rendered operational by wear of the friction linings when the clutch is engaged.

11. Friction clutch according to claim 10 **characterized in that** the axially acting clutch engaging means (3, 53) comprise a diaphragm.

12. Friction clutch according to claim 10 or claim 11 **characterized in that** the lead screw (13, 63) is movable along its axis by take-up spring means (40, 86) and the rotation drive means (20, 60) of the lead screw (13, 63) comprise a ratchet wheel constrained to rotate with the lead screw (13, 63).

13. Friction clutch according to any one of claims 10 to 12 **characterized in that** the rotation drive means (20, 60) of the lead screw (13, 63) are operated by an actuator tongue (35, 76) the travel of which relative to the ratchet wheel (20, 60) during the clutch release operation is limited by a control abutment (36A, 73).

14. Friction clutch according to any one of claims 10 to 13 **characterized in that** the means for disabling the wear take-up device consist in the fact that the length of teeth (18) with which the lead screw (13) cooperates enables it to effect a take-up corresponding to part only of the thickness of the linings that wear.

15. Friction clutch according to claim 14 **characterized in that** a recess (30) is provided at the end of the teeth (18) to decouple the lead screw (13) from the teeth (18).

16. Friction clutch according to claim 2 wherein the clutch engaging means comprise a diaphragm articulated to the cover between two supports, namely a primary support (110) on the same side as the cover and a secondary support (111) on the same side as the pressure plate (101) and facing the primary support (110), the clutch being of the push type, the support that can be offset being the primary support (110) and triggering being obtained by sinking of the secondary support (111) cooperating with trigger spring means (120) bearing on the cover (108), **characterized in that** the disabling means comprise an abutment (112, 122) limiting the travel of the trigger spring means (120).

17. Friction clutch according to claim 16 **characterized in that** the disabling abutment (112) is on the cover (108).

18. Friction clutch according to claim 16 wherein the primary support (110) and the secondary support (111) of the diaphragm are carried by circumferentially distributed columns (109) attached to the cover (108), **characterized in that** the disabling abutment (122) is on at least one of said columns (109).

19. Friction clutch according to claim 2 wherein the clutch is of the pull type and the support that can be offset is the cover support, the detector means comprising a pin (160) disposed with axial clearance between two abutments (115, 172) attached to the pressure plate (101) and passing through a friction bearing surface (161) of the cover (108) with friction, **characterized in that** the length of the friction bearing surface (161) is less than that of the pin (160) with the result that the pin (160) is free relative to the cover (108) when the pressure plate (101) is in the clutch released position, the linings being worn by a chosen amount less than the total possible wear.

20. Friction clutch according to claim 2 wherein the clutch is of the pull type and the support that can be offset is the cover support, the detector means comprising a pin (180) disposed with axial clearance between two abutments (115, 172) attached to the pressure plate and passing through a friction bearing surface of the cover (108) with friction, **characterized in that** the pin (180) is in two parts, namely an outside part (181) surrounding the inside part (182), the outside part (181) passing through the cover (108) with friction and the inside part (182) being mounted with friction inside the outside part (181), the outside part (181) having a rim (183) adapted to abut on the cover (108) so that thereafter it is no longer driven by the pressure plate (101) and no longer serves as detector means.

21. Friction clutch according to claim 2 wherein the clutch is of the pull type and the support that can be offset is the cover support, the detector means comprising a pin disposed with axial clearance between two abutments, one attached to the reaction plate and the other to the cover, and passing through a friction bearing surface of the pressure plate with friction, **characterized in that** the length of the friction bearing surface is less than that of the pin so that the pin is free relative to the pressure plate when the pressure plate is in the clutch released position, the linings having worn by a chosen amount less than the total possible wear.

22. Friction clutch according to claim 2 wherein the clutch is of the pull type and the support that can be offset is the cover support, the detector means comprising a pin disposed with axial clearance between two abutments, one attached to the reaction plate and the other to the cover, and passing through a friction bearing surface of the pressure plate with friction, **characterized in that** the pin is in two parts, namely an outside part around the other, inside part, the outside part passing through the pressure plate with friction and the inside part being mounted with friction inside the outside part, the outside part having a rim adapted to abut on the pressure plate so that thereafter it is no longer movable relative to the pressure plate and no longer serves as detector means.

23. Friction clutch according to any one of claims 19 to 22 **characterized in that** the clutch engaging means comprise clutch release levers (150) associated with coil springs (151) bearing on the cover (108).

24. Friction clutch according to claim 2 wherein the clutch engaging means comprise a diaphragm articulated to the cover, the support which can be offset being the pressure plate support, the clutch being of the push type, the detector means (102) comprising a pin (103) passing through the pressure plate (101) with friction and carrying an arm (104) cooperating with the ramp means (81) to limit rotation thereof on each take-up operation, **characterized in that** the pin (103) has a rim (123) limiting its movement relative to the pressure plate (101) by said rim (123) abutting on the pressure plate (101) so that it no longer serves as detector means.

25. Friction clutch according to claim 24 **characterized in that** the pin (103) is adapted to abut against the reaction plate through the intermediary of a sliding pin (124) that it carries, the sliding force being higher than the friction force between the pin (103) and the pressure plate (101).

26. Friction clutch according to any one of claims 1 to 25 **characterized in that** warning means are provided to indicate disabling of the wear take-up device.
